# NEUE EUROPÄISCHE PATENTSCHRIFT

(11) **EP 2 233 326 B2**
(45) Veröffentlichungstag und Bekanntmachung des Hinweises auf die Entscheidung über den Einspruch: **11.11.2020**
(45) Hinweis auf die Patenterteilung: 03.12.2014
(21) Anmeldenummer: 10157255.0
(22) Anmeldetag: 22.03.2010
(51) Int. Cl.: B60D 1/54

(54) **Anhängekupplung**
Tow bar
Attelage

(30) Priorität: 25.03.2009 DE 102009015916
(43) Veröffentlichungstag der Anmeldung: 29.09.2010
(73) Patentinhaber: ACPS Automotive GmbH, 71706 Markgröningen (DE)
(72) Erfinder: Wieczorek, Romeo, 73732 Esslingen (DE); Riehle, Jörg, 71679 Asperg (DE)
(74) Vertreter: Hoeger, Stellrecht & Partner Patentanwälte mbB

(56) Entgegenhaltungen:
- EP-A1- 1 024 036
- EP-A1- 1 288 026
- EP-A1- 1 557 298
- EP-A1- 1 886 847
- EP-A1- 1 894 752
- EP-A1- 2 130 698
- EP-A2- 1 225 069
- EP-B1- 1 478 528
- DE-A1- 19 749 544
- DE-A1-102004 045 869
- DE-A1-102005 056 217
- DE-A1-102006 058 457
- DE-C2- 19 711 535
- DE-U1-202006 011 346

## Beschreibung

Die Erfindung betrifft eine Anhängekupplung für Kraftfahrzeuge umfassend einen Kugelhals, der an einem Ende eine Kupplungskugel trägt und an einem anderen Ende mit einem Schwenklagerkörper verbunden ist, eine Schwenklagereinheit, mit welcher der Schwenklagerkörper um mindestens eine Schwenkachse zwischen definierten Stellungen schwenkbar ist und eine Drehblockiereinrichtung, mit welcher der Schwenklagerkörper relativ zur Schwenklagereinheit in mindestens einer der Stellungen durch zusammenwirkende Formschlusselemente blockierbar ist und einen Drehblockierantrieb mit einer Drehblockiersteuerung zum Bewegen der Formschlusselemente zwischen einer Drehblockierstellung und einer Freilaufstellung.

Derartige Anhängekupplungen sind aus dem Stand der Technik bekannt. Eine derartige Anhängekupplung ist beispielsweise in der EP 1 886 847 A oder der EP 1 024 036 A. beschrieben.

Bei derartigen Anhängekupplungen besteht das Problem, dass Formschlusselemente der Drehblockiereinrichtung dann, wenn sie ein geringes Spiel haben, durch Materialdeformationen Formveränderungen erleiden, die dazu führen, dass sich bei Betriebsbelastungen des Kugelhalses das Spiel der Formschlusselemente im Lauf der Zeit weiter vergrößert.

Der Erfindung liegt daher die Aufgabe zugrunde, eine Anhängekupplung der gattungsgemäßen Art derart zu verbessern, dass eine derartige Vergrößerung des Spiels der Drehblockiereinrichtung vermieden wird.

Diese Aufgabe wird bei einer Anhängekupplung der eingangs beschriebenen Art erfindungsgemäß durch die Merkmale des Anspruchs 1 gelöst.

Der Vorteil der erfindungsgemäßen Lösung ist darin zu sehen, dass damit die Möglichkeit besteht, die Materialdeformationen im Bereich der Formschlusselemente zu vermeiden oder zumindest zu reduzieren.

Es hat sich nämlich bei der erfindungsgemäßen Lösung herausgestellt, dass dann, wenn ständig die Formschlusselemente gegeneinander verspannt sind, die Materialdeformation im Bereich der aneinander anliegenden Formschlusselemente geringer sind als in dem Fall, dass ein geringes Spiel zwischen diesen besteht, das sich aufgrund der bei Betriebsbelastungen auftretenden Belastungsspitzen zunehmend vergrößert.

Um zu erreichen, dass nicht ständig ein Verspanndrehmoment seitens des elektrischen Antriebsmotors aufgebracht werden muss, ist vorzugsweise vorgesehen, dass die Verspannsteuerung nach Erreichen des Verspanndrehmoments den Verspannbetriebsmodus beendet.

Das Erreichen des Verspanndrehmoments kann in unterschiedlichster Art und Weise ermittelt werden.

Beispielweise könnte eine Drehmomenterfassung bei einem der mechanischen Teile, beispielsweise über eine mechanische Deformation eines Antriebsteils, erfolgen.

Die Erfindung sieht jedoch vor, dass die Verspannsteuerung das Erreichen des Verspanndrehmoments durch eine Strommessung des Stroms durch den elektrischen Antriebsmotor umfasst.

Ferner besteht bei einer Strommessung das Problem, dass die Schaltung für die Strommessung und die nachträgliche Auswertung Ansprechzeiten hat, die zur Folge haben, dass die Bestromung des elektrischen Antriebsmotors selbst bei Erreichen des Verspanndrehmoments noch für eine relativ lange Zeit aufrecht erhalten muss, bis die Strommessung und Verspannbetriebsmodus beendet sind.

Aus diesem Grund sieht die Erfindung vor, dass die Verspannsteuerung einen Strompulsgenerator aufweist, welcher in dem Verspannbetriebsmodus den elektrischen Antriebsmotor mit einer Pulsfolge aus einzelnen Strompulsen betreibt.

Die Benutzung einzelner Strompulse hat den Vorteil, dass damit immer wieder ein Unterbrechen der Bestromung des elektrischen Antriebsmotors erfolgt und somit der elektrische Antriebsmotor schonender betrieben werden kann.

Besonders günstig ist es, wenn die Verspannsteuerung mit einer Pulsstromerfassungseinheit zum Messen des Stroms der einzelnen Strompulse versehen ist und dass die Verspannsteuerung in dem Verspannbetriebsmodus bei jedem einzelnen Strompuls der Pulsfolge den Stromwert des durch den elektrischen Antriebsmotors fließenden Strom erfasst.

Diese Lösung hat den großen Vorteil, dass einerseits durch die Strompulse eine zeitlich limitierende Bestromung des elektrischen Antriebsmotors und somit ein schonender Betrieb des elektrischen Antriebsmotors auch bei Erreichen des Verspanndrehmoments erfolgt, und dass andererseits durch die Messung des Stroms der einzelnen Strompulse die Möglichkeit besteht, den Zeitraum zwischen einem Strompuls und dem nächstfolgenden Strompuls dazu zu nutzen, die Strommessung auszuwerten und gegebenenfalls den Verspannbetriebsmodus zu beenden.

Im einfachsten Fall ist hierzu die Verspannsteuerung mit einer Komparatoreinheit versehen, welche den Stromwert mit einem Stromschwellwert vergleicht und bei Überschreiten des Stromschwellwerts der Verspannsteuerung ein Signal übermittelt.

Insbesondere ist dabei vorgesehen, dass die Verspannsteuerung die Pulsfolge dann abbricht, wenn der Strom eines Strompulses den festgelegten Stromschwellwert überschreitet.

Wenn seitens der Verspannsteuerung ein Verspannen der Drehblockiereinrichtung lediglich dann erfolgen soll, wenn die Drehblockiereinrichtung die Drehblockierstellung erreicht hat, ist vorzugsweise vorgesehen, dass die Anhängekupplung mit einer die Drehblockiersteuerung und die Verspannsteuerung umfassenden Steuerung versehen ist und dass die Steuerung das Erreichen der Drehblockierstellung durch die Formschlusselemente beim Übergang von der Freigabestellung in die Drehblockierstellung erfasst und das Erreichen der Drehblockierstellung ein erstes Auslösesignal für den Start eines Interimsmodus der Verspannsteuerung auslöst.

Damit ist sichergestellt, dass nur dann, wenn die Drehblockierstellung erreicht wird, überhaupt ein Interimsmodus der Verspannsteuerung und gegebenenfalls nachfolgend ein Verspannbetriebsmodus ausgelöst werden kann.

Ferner ist vorzugsweise vorgesehen, dass ein Interimsmodus der Verspannsteuerung nur dann ausgelöst wird, wenn die Drehblockierstellung erreicht ist und die Anhängekupplung in ihrer Arbeitsstellung steht, da es für die Ruhestellung nicht zwingend notwendig ist, die Drehblockiereinrichtung zu verspannen.

Es ist aber jedoch auch denkbar, in der Ruhestellung ein Verspannen der Drehblockiereinrichtung vorzusehen.

Hinsichtlich der Erfassung der Drehblockierstellung sind die unterschiedlichsten Möglichkeiten denkbar.

Beispielsweise ist es denkbar, einem der Elemente der Drehblockiereinrichtung einen Sensor zuzuordnen, welcher die Drehblockierstellung der Drehblockiereinrichtung, beispielsweise die Drehblockierstellung eines oder mehrerer der Formschlusselemente, erfasst.

Eine besonders einfache Lösung sieht jedoch vor, dass die Anhängekupplung mit einer die Drehblockiersteuerung und die Verspannsteuerung umfassenden Steuerung versehen ist und die Steuerung das Erreichen der Drehblockierstellung durch Überschreiten einer Drehmomentschwelle des elektrischen Antriebsmotors erfasst.

Um ferner zu vermeiden, dass die Verspannsteuerung aktiv ist, obwohl das Fahrzeug nicht betrieben wird, ist vorzugsweise vorgesehen, dass die Anhängekupplung mit einer die Drehblockiersteuerung und die Verspannsteuerung umfassenden Steuerung versehen ist und dass die Steuerung das Einschalten einer Zündung des Kraftfahrzeugs erfasst und dass bei Einschalten der Zündung des Kraftfahrzeugs die Steuerung ein erstes Auslösesignal für den Start eines Interimsmodus der Verspannsteuerung erzeugt.

Darüber hinaus ist es denkbar, die Steuerung so auszubilden, dass die Verspannsteuerung nach Beendigung des Verspannbetriebsmodus ein erstes Auslösesignal für den Start eines Interimsmodus der Verspannsteuerung erzeugt.

Hinsichtlich der Aktivitäten der Verspannsteuerung im Interimsmodus sind die unterschiedlichsten Lösungen einzeln, alternativ oder in Kombination miteinander denkbar.

So sieht eine vorteilhafte Lösung vor, dass die Verspannsteuerung im Interimsmodus ein Kilometersignal erfasst, das bei Überschreiten einer bestimmten Kilometerzahl nach dem ersten Auslösesignal ein zweites Auslösesignal zum Start des Verspannbetriebsmodus erzeugt.

Alternativ oder ergänzend sieht eine weitere vorteilhafte Lösung vor, dass die Verspannsteuerung im Interimsmodus Bremsvorgänge des Kraftfahrzeugs erfasst und nach einer vorgegebenen Zahl von Bremsvorgängen nach dem ersten Auslösesignal ein zweites Auslösesignal zum Start des Verspannbetriebsmodus erzeugt.

Die Erfassung der Bremsvorgänge kann dabei in unterschiedlichster Art und Weise erfolgen.

Beispielsweise kann ein Sensor vorgesehen sein, der einen Druckaufbau im Bremssystem oder eine Betätigung des Bremssystems erfasst.

Eine andere vorteilhafte Lösung sieht vor, dass die Steuerung die Bremsvorgänge aufgrund eines Ansteuerns von Bremslichtern des Kraftfahrzeugs erfasst, beispielsweise durch eine Stromerfassung des durch die Bremsleuchten fließenden Stroms erfasst.

Eine weitere zweckmäßige Lösung sieht alternativ oder ergänzend zu den bisherigen Lösungen vor, dass die Verspannsteuerung im Interimsmodus den Geschwindigkeitsverlauf des Kraftfahrzeugs erfasst und Geschwindigkeitsänderungen ermittelt und bei Überschreiten einer bestimmten Zahl von Geschwindigkeitsänderungen, die beispielsweise über einem von Null verschiedenen Schwellwert liegen, nach dem ersten Auslösesignal ein zweites Auslösesignal zum Start des Verspannbetriebsmodus erzeugt.

Alternativ oder ergänzend zu den bisherigen Ausführungsformen sieht eine weitere vorteilhafte Lösung vor, dass die Verspannsteuerung im Interimsmodus über einen Sensor Lastwechsel am Kugelhals ermittelt und bei Überschreiten einer bestimmten Zahl von Lastwechseln, die beispielsweise über einem von Null verschiedenen Schwellwert liegen, nach dem ersten Auslösesignal ein zweites Auslösesignal zum Start des Verspannbetriebsmodus erzeugt.

Bei den bisherigen Ausführungsbeispielen wurden lediglich Fahrzustände erfasst.

Die Verspannsteuerung kann einen oder mehrere der vorstehend beschriebenen Fahrzustände heranziehen, um zu ermitteln, wann ein erneuter Verspannbetriebsmodus ausgelöst werden soll.

Alternativ oder ergänzend zum Heranziehen der Fahrzustände ist es auch möglich, dass die Verspannbetriebssteuerung nach einem ersten im Interimsmodus eine gewisse Wartezeit verstreichen lässt und nach Ablauf dieser Wartezeit ein zweites Auslösesignal zum Start des Verspannbetriebsmodus erzeugt.

Die Wartezeit wird dabei vorzugsweise entsprechend dem Verspannzustand der Drehblockiereinrichtung ermittelt.

Eine weitere vorteilhafte Lösung sieht vor, dass die Wartezeit ergänzend oder alternativ zum Verspannzustand aufgrund des Maßes für die Betriebsbelastung der Anhängekupplung ermittelt wird, welches erkennen lässt, bis zu welchem Grad sich eine Verspannung abbaut.

Der Verspannzustand könnte über einen Sensor ermittelt werden oder über eine Messung eines Stroms für den Antriebsmotor.

Eine vorteilhafte Lösung sieht vor, dass die Verspannsteuerung aus der Pulsfolge im Verspannbetriebsmodus den Verspannzustand der Drehblockiereinrichtung ermittelt.

Beispielsweise kann dabei der Verspannzustand der Drehblockiereinrichtung dadurch ermittelt werden, dass die Verspannsteuerung aus dem Stromwert des letzten Strompulses den Verspannzustand ermittelt.

Diese Lösung geht davon aus, dass dann, wenn der Stromwert des letzten Strompulses möglichst hoch ist, das heißt auch möglichst weit über der Verspannschwelle liegt, eine sehr starke Verspannung der Drehblockiereinrichtung vorliegt.

Eine vorteilhafte Lösung sieht vor, dass die Verspannsteuerung aus der Pulsfolge ein Maß für die Betriebsbelastung der Anhängekupplung ermittelt und somit ein Maß dafür hat, wie stark sich die Verspannung gelöst hat.

Insbesondere ist bei einer Ausführungsform vorgesehen, dass die Verspannsteuerung die Wartezeit in Abhängigkeit von einer Betriebsbelastung der Drehblockiereinrichtung oder der Anhängekupplung ermittelt.

Vorzugsweise ist dabei vorgesehen, dass die Verspannsteuerung aus der Zahl der Strompulse bis zum Abbrechen der Pulsfolge das Maß für die Betriebsbelastung der Drehblockiereinrichtung oder der Anhängekupplung ermittelt.

Eine besonders günstige Lösung sieht vor, dass die Verspannsteuerung aus dem Verspannzustand und dem Maß für die Betriebsbelastung der Drehblockiereinrichtung oder der Anhängekupplung beispielsweise über eine Tabelle die Wartezeit ermittelt.

Beispielsweise erfolgt dabei die Ermittlung der Wartezeit in dem Interimsmodus, und der Interimsmodus bleibt so lange bestehen, bis die Wartezeit abgelaufen ist und danach wird ein zweites Auslösesignal zum Start des Verspannbetriebsmodus erzeugt.

Eine günstige Lösung sieht vor, dass die Wartezeit und einer oder mehrere Fahrzustände erfasst werden, und dass dann, wenn aufgrund der Wartezeit oder des mindestens einen Fahrzustandes ein zweites Auslösesignal erzeugt wird, der Verspannbetriebsmodus gestartet wird.

Im Zusammenhang mit der bisherigen Erläuterung der einzelnen Ausführungsbeispiele wurde nicht näher darauf eingegangen, ob unabhängig vom Fahrzustand eine Bestromung des elektrischen Antriebsmotors des Drehblockierantriebs erfolgt.

Grundsätzlich besteht keine Notwendigkeit, auf Fahrzustände Rücksicht zu nehmen.

Für die Frage der optimalen Verspannung ist es jedoch günstig, wenn die Verspannsteuerung im Verspannbetriebsmodus eine Bestromung des elektrischen Antriebsmotors bei Vorliegen eines belastungsintensiven Fahrzustands des Kraftfahrzeugs aussetzt.

Der Vorteil dieser Lösung ist darin zu sehen, dass damit eine Bestromung des elektrischen Antriebsmotors in dem belastungsintensiven Fahrzustand des Kraftfahrzeugs vermieden wird, da in diesem Zustand eine Bestromung des elektrischen Antriebsmotors kein günstiges Verspannen der Drehblockiereinrichtung zulässt, da die Kräfte, die in diesem Fahrzustand auf den Kugelhals und die Kupplungskugel wirken, auch auf die Drehblockiereinrichtung zurückwirken und somit das Verspannen der Drehblockiereinrichtung negativ beeinträchtigen können.

Insbesondere ist dabei vorgesehen, dass die Verspannsteuerung bei Vorliegen des belastungsintensiven Fahrzeugs den jeweiligen Strompuls unterdrückt. Das heißt, dass wenn in diesem Fall eine Bestromung des elektrischen Antriebsmotors mit einer Pulsfolge von Strompulsen erfolgt, bei Feststellen eines belastungsintensiven Fahrzustandes eine Unterdrückung des nächstfolgenden Strompulses oder aller Strompulse der Pulsfolge erfolgt, um erst dann wieder den elektrischen Antriebsmotor mit den Strompulsen zu bestromen, wenn die besondere Belastung des Kugelhalses und der Kupplungskugel beendet ist und somit ein Verspannen der Drehblockiereinrichtung in der gewünschten Art und Weise erfolgen kann.

Hinsichtlich der Erkennung eines belastungsintensiven Fahrzustandes gibt es eine Vielzahl von Möglichkeiten, die alternativ oder kumulativ eingesetzt werden können.

So sieht eine Möglichkeit vor, dass die Verspannsteuerung eine Geschwindigkeit des Fahrzeugs erfasst und bei Geschwindigkeitsänderungen, die über einem Schwellwert liegen, einen belastungsintensiven Fahrzustand erkennt.

Das heißt, dass in diesem Fall die Verspannsteuerung in der Lage ist, Beschleunigungs- und Bremsvorgänge als für die Anhängekupplung belastungsintensiven Fahrzustand zu erkennen und in diesen die Bestromung des elektrischen Antriebsmotors zum Verspannen der Drehblockiereinrichtung zu unterdrücken.

Eine weitere vorteilhafte Möglichkeit sieht vor, dass die Verspannsteuerung Bremsvorgänge des Kraftfahrzeugs erfasst und bei einem Bremsvorgang einen belastungsintensiven Fahrzustand erkennt.

Das Erfassen der Bremsvorgänge kann - wie vorstehend bereits in anderem Zusammenhang beschrieben - durch erfassen eines Stroms durch die Bremsleuchten erfolgen.

Generell kann dabei bei Bremsvorgängen davon ausgegangen werden, dass hier eine Belastung des Kugelhalses vorliegt, die das Verspannen der Drehblockiereinrichtung negativ beeinträchtigen könnte.

Eine weitere vorteilhafte Möglichkeit sieht vor, dass die Verspannsteuerung eine Last am Kugelhals mit einem Sensor erfasst und bei Überschreiten eines Schwellwerts der Last einen belastungsintensiven Fahrzustand erkennt.

In diesem Fall wird beispielsweise mit einem Dehnungssensor die Belastung des Kugelhalses erfasst und es besteht die Möglichkeit, bei starken über dem Schwellwert liegenden Belastungen des Kugelhalses einen belastungsintensiven Fahrzustand zu erkennen, bei dem ein Verspannen der Drehblockiereinrichtung nicht sinnvoll durchgeführt werden kann.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Rückansicht eines Kraftfahrzeugs mit einer erfindungsgemäßen Anhängekupplung;
- Fig. 2: eine Draufsicht auf ein erstes Ausführungsbeispiel einer erfindungsgemäßen Anhängekupplung mit Blick in Fahrtrichtung ähnlich Fig. 1 auf die an einem Fahrzeugheck montierte Anhängekupplung, wobei die Anhängekupplung in ihrer Arbeitsstellung steht;
- Fig. 3: eine Ansicht entsprechend Fig. 2 der in der Ruhestellung stehenden Anhängekupplung;
- Fig. 4: eine Ansicht in Richtung des Pfeils X in Fig. 2;
- Fig. 5: einen Teilschnitt längs einer durch die Schwenkachse sowie einen der Drehblockierkörper hindurchverlaufenden Schnittebene in einer Blockierstellung der Drehblockierelemente und einer aktiven Stellung eines Betätigungskörpers;
- Fig. 6: einen Schnitt längs Linie 6-6 in Fig. 5;
- Fig. 7: eine Darstellung ähnlich Fig. 5 bei in Lösestellung stehendem Drehblockierkörper und in inaktiver Stellung stehendem Betätigungskörper;
- Fig. 8: einen Schnitt entsprechend Fig. 6 bei der Stellung der Drehblockierkörper und des Betätigungskörpers in Fig. 7;
- Fig. 9: einen vergrößerten Schnitt entsprechend Fig. 6 bei drehfester Blockierung des Schwenklagerkörpers mittels der Drehblockierkörper;
- Fig. 10: eine ausschnittsweise vergrößerte Darstellung des Drehblockierelements 54b;
- Fig. 11: eine ausschnittsweise vergrößerte Darstellung des Drehblockierelements 54c;
- Fig. 12: eine ausschnittsweise vergrößerte Darstellung des Drehblockierelements 54a;
- Fig. 13: einen schematischen Aufbau einer Steuerung des ersten Ausführungsbeispiels der erfindungsgemäßen Anhängekupplung;
- Fig. 14: eine schematische Darstellung von Pulsfolgen mit Strompulsen für ein Verspannen der Drehblockiereinrichtung;
- Fig. 15: ein schematisches Flussdiagramm für ein Abbrechen der Pulsfolgen bei Überschreiten einer Verspannschwelle;
- Fig. 16: einen Teilschnitt ähnlich Fig. 5 durch ein zweites Ausführungsbeispiel einer erfindungsgemäßen Anhängekupplung bei in einer ersten Drehblockierstellung stehendem Betätigungskörper und Drehblockierkörper;
- Fig. 17: einen Teilschnitt ähnlich Fig. 7 durch das zweite Ausführungsbeispiel der erfindungsgemäßen Anhängekupplung bei in Freilaufstellung stehendem Betätigungskörper und Drehblockierkörper vor einer Schwenkbewegung des Schwenklagerkörpers;
- Fig. 18: einen Teilschnitt ähnlich Fig. 17 durch das zweite Ausführungsbeispiel der erfindungsgemäßen Anhängekupplung nach einer Schwenkbewegung des Schwenklagerkörpers von einer Arbeitsstellung in eine Ruhestellung;
- Fig. 19: einen Teilschnitt ähnlich Fig. 5 durch das zweite Ausführungsbeispiel der erfindungsgemäßen Anhängekupplung bei in einer zweiten Drehblockierstellung stehendem Betätigungskörper und Drehblockierkörper und
- Fig. 20: einen schematischen Aufbau ähnlich Fig. 13 einer Steuerung des zweiten Ausführungsbeispiels der erfindungsgemäßen Anhängekupplung.

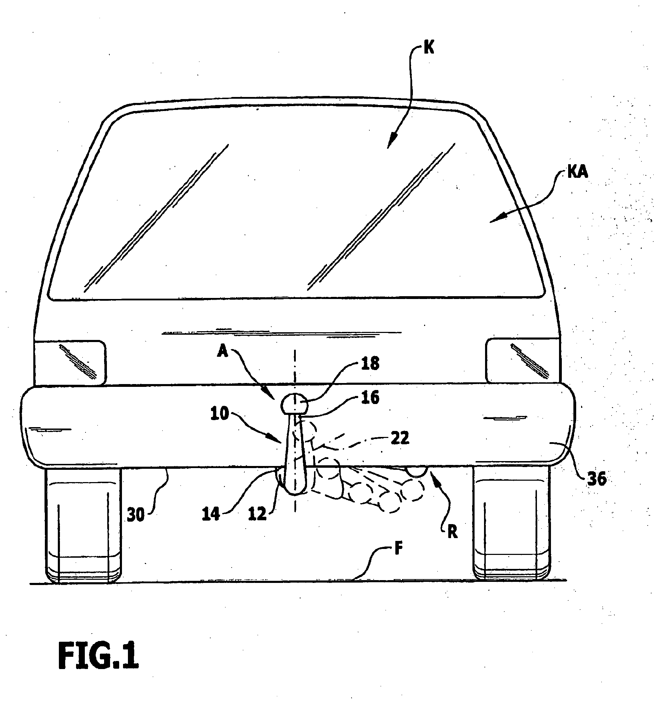

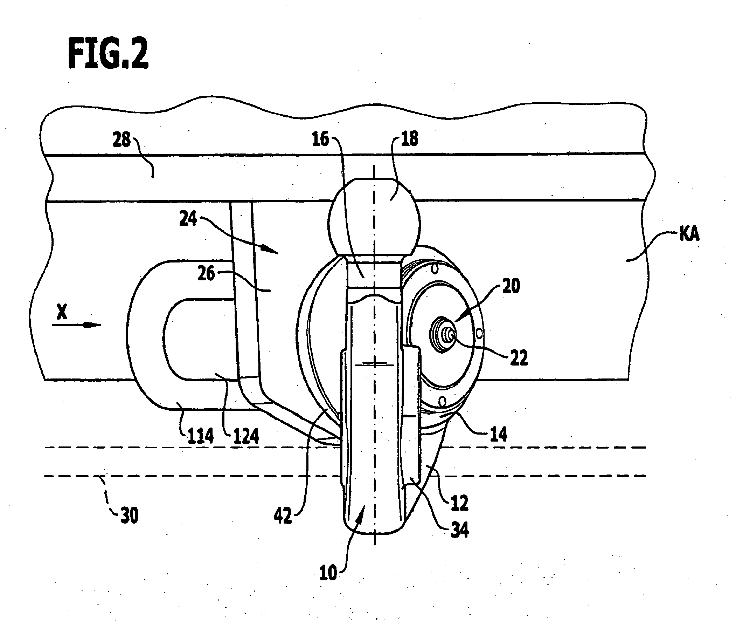

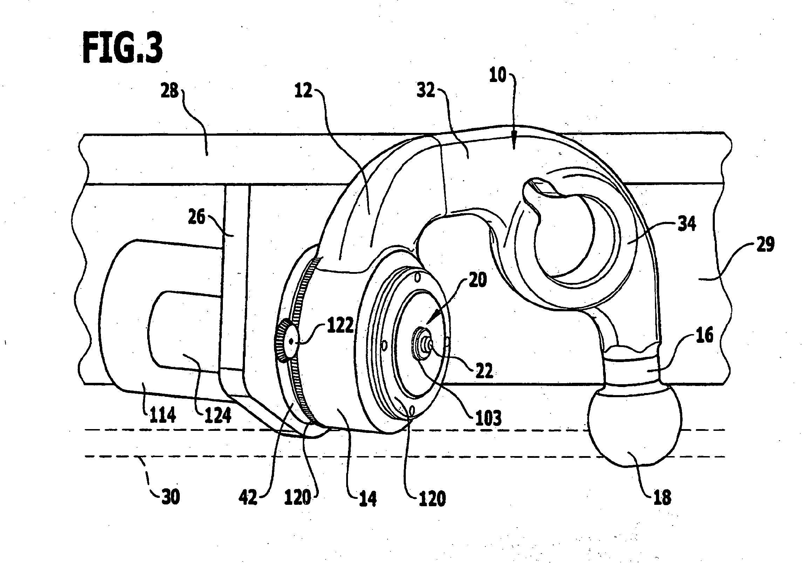

Ein erstes Ausführungsbeispiel einer erfindungsgemäßen Anhängekupplung für ein Kraftfahrzeug K, dargestellt in Fig. 1 und 2 in einer Arbeitsstellung A und in Fig. 3 in einer Ruhestellung R, umfasst einen als Ganzes mit 10 bezeichneten Kugelhals, welcher mit einem ersten Ende 12 an einem Schwenklagerkörper 14 gehalten ist und an einem zweiten Ende 16 eine als Ganzes mit 18 bezeichnete Kupplungskugel trägt, an welcher eine Kupplungskugelaufnahme eines Anhängers fixierbar ist.

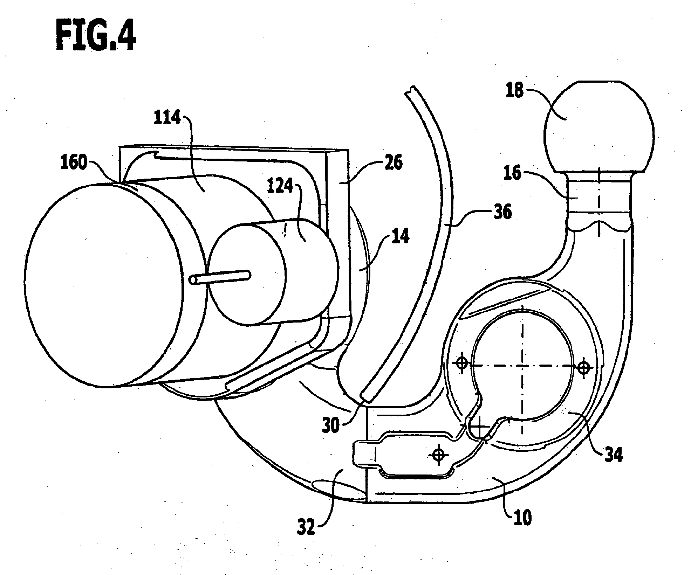

Der Schwenklagerkörper 14 ist durch eine als Ganzes mit 20 bezeichnete Schwenklagereinheit um eine Schwenkachse 22 relativ zu einem fahrzeugfesten Träger 24 schwenkbar gelagert, wobei der Träger 24 vorzugsweise eine die Schwenklagereinheit 20 haltende Tragplatte 26 aufweist, welche sich vorzugsweise in einer zur Schwenkachse 22 senkrechten Ebene erstreckt und einen fahrzeugfesten Querträger 28, welcher in bekannter Weise heckseitig einer Fahrzeugkarosserie KA befestigbar ist, und zwar so, dass die Schwenklagereinheit 20 und der Träger 24 auf einer einer Fahrbahnoberfläche F abgewandten Seite einer Unterkante 30 einer Stoßfängereinheit 36 liegen, und durch die Stoßfängereinheit 36 abgedeckt sind (Fig. 4).

In der in Fig. 1, 2 und 3 dargestellten Arbeitsstellung untergreift der Kugelhals 10 mit einem sich an das erste Ende 12 anschließenden Abschnitt 32 die Unterkante 30 der Stoßfängereinheit 36, so dass das zweite Ende 16 und die Kupplungskugel 18 mitsamt einer Steckdosenaufnahme 34 auf einer der Fahrzeugkarosserie abgewandten Seite der hinteren Stoßfängereinheit 36 stehen, während in der Ruhestellung sowohl die Schwenklagereinheit 20 als auch der gesamte Kugelhals 10 mitsamt der Kupplungskugel 18 von der hinteren Stoßfängereinheit 36 gegen Sicht von hinten abgedeckt sind.

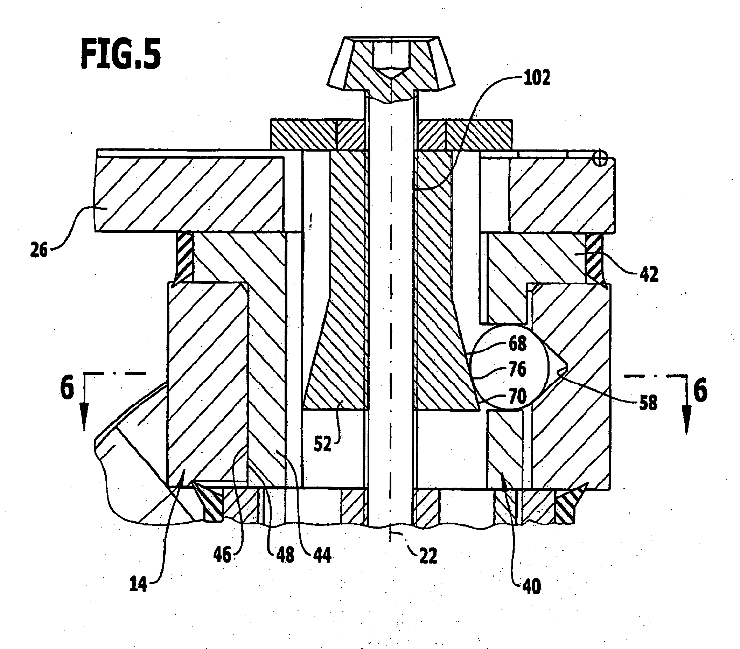

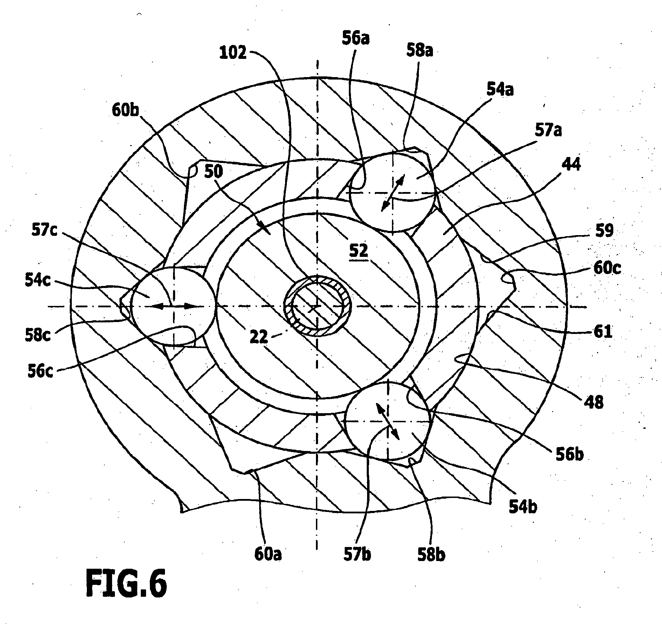

Die Schwenklagereinheit 20 umfasst, wie in Fig. 5 und 6 dargestellt, einen Führungskörper 40, welcher mit einem Flansch 42 fest mit der Tragplatte 26 verbunden ist und eine sich ausgehend von dem Flansch 42 von der Tragplatte 26 weg erstreckende Führungshülse 44, auf welcher der Schwenklagerkörper 14 drehbar gelagert ist. Hierzu umfasst die Führungshülse 44 eine zylindrische Außenmantelfläche 46, auf welcher der Schwenklagerkörper 14 mit einer zylindrischen Innenfläche 48 aufliegt und dadurch um die Schwenkachse 22 eine Drehführung erfährt, so dass der Schwenklagerkörper 14 derart relativ zum Führungskörper 40 drehbar ist, dass der Kugelhals 10 von der Arbeitsstellung A in die Ruhestellung R und umgekehrt verschwenkbar ist.

Der Führungskörper 40 bildet somit durch seine feste Verbindung mit der Trägerplatte 26 und dem Träger 24 die fahrzeugfeste Drehlagerung für den Schwenklagerkörper 14.

Zur Fixierung des Schwenklagerkörpers 14 in der Arbeitsstellung A und der Ruhestellung R ist die Schwenklagereinheit 20 mit einer als Ganzes mit 50 bezeichneten Drehblockiereinrichtung versehen, welche einen Betätigungskörper 52, mehrere durch den Betätigungskörper 52 beaufschlagbare Drehblockierkörper 54, beispielsweise Kugeln, welche in Führungsaufnahmen 56 der Führungshülse 44 in einer im wesentlichen radial zur Schwenkachse 22 verlaufenden Führungsrichtung 57 bewegbar geführt sind, sowie sich ausgehend von der Innenfläche 48 des Schwenklagerkörpers 14 in diesen hineinerstreckende erste Aufnahmen 58 und zweite Aufnahmen 60, mit denen die Drehblockierkörper 54 in der Arbeitsstellung A bzw. in der Ruhestellung R in Eingriff bringbar sind, wobei die Aufnahmen 58, 60 in radialer Richtung zur Schwenkachse 22 zunehmend einen geringeren Abstand voneinander aufweisende Wandflächen 59, 61 haben. Im einfachsten Fall verlaufen die Wandflächen 59, 61 als Kegelflächen aufeinanderzu.

Umfasst beispielsweise die Drehblockiereinrichtung 50, wie im Zusammenhang mit Fig. 5 und Fig. 6 beim ersten Ausführungsbeispiel dargestellt, einen Satz von drei Drehblockierkörpern 54a, 54b und 54c, so weist die Führungshülse 44 einen Satz von drei Führungsaufnahmen 56a, 56b und 56c auf, in welchen die Drehblockierkörper 54a, 54b und 54c in der im Wesentlichen radial zur Schwenkachse 22 verlaufenden Führungsrichtung 57 verschiebbar geführt sind, und der Schwenklagerkörper 14 ist mit einem Satz von ersten Aufnahmen 58a, 58b und 58c versehen, mit welchen die Drehblockierkörper 54a, 54b und 54c in der Arbeitsstellung A in Eingriff bringbar sind und mit einem Satz von zweiten Aufnahmen 60a, 60b und 60c versehen, mit welchen die Drehblockierkörper 54a, 54b und 54c in der Ruhestellung R in Eingriff bringbar sind. Bei geeignetem Winkelabstand der Arbeitsstellung A und der Ruhestellung R ist auch ein Satz von Aufnahmen für die Drehblockierung in beiden Stellungen einsetzbar.

Zum geeigneten Bewegen und Positionieren der Drehblockierkörper 54 in der Führungsrichtung 57 ist der Betätigungskörper 52 mit Rückzugsaufnahmen 62 versehen, die im einfachsten Fall durch eine gegenüber dem Führungskörper 40 radial zur Schwenkachse 22 zurückgesetzte zylindrische Fläche 63 des Betätigungskörpers gebildet ist und mit sich an die Rückzugsaufnahmen 62 in axialer Richtung 64 anschließenden Druckflächen 66, welche im einfachsten Fall als eine sich ausgehend von der Zylinderfläche 63 radial zur Schwenkachse 22 konisch erweiternde Konusfläche 67 gebildet sind. Die Drehblockierkörper 54 liegen in ihrer Freilaufstellung oder Lösestellung im Bereich der Rückzugsaufnahmen 62, das heißt der Zylinderfläche 63 des Betätigungskörpers 52 auf und sind damit in radialer Richtung zur Schwenkachse 22 so weit in den Führungskörper 40 hineinbewegt, dass sie nicht mehr über die Außenmantelfläche 46 der Führungshülse 44 überstehen.

Mittels der Druckflächen 66 sind die Drehblockierkörper 54 mit zunehmender Verschiebung des Betätigungskörpers 52 in axialer Richtung 64 radial zur Führungshülse 44 so weit nach außen bewegbar, bis sie in einer ersten Drehblockierstellung stehen, in welcher die Drehblockierkörper 54 in ihrer Führungsrichtung 57 so weit nach Außen geschoben sind, dass sie entweder in die Aufnahmen 58 oder die Aufnahmen 60 des Schwenklagerkörpers 14 eingreifen und somit diesen relativ zur Führungshülse 44 festlegen.

Bei dem beschriebenen Ausführungsbeispiel sind der Einfachheit halber die Druckflächen 66 als Konusflächen 67 dargestellt. Anstelle eines Konus kann jedoch jeder sich zunehmen und kontinuierlich radial zur Schwenkachse 22 erweiternde Körper vorgesehen sein, welcher in der Lage ist, beim Verschieben des Betätigungskörpers 52 in der axialen Richtung 64 die Drehblockierkörper 54 in ihren Führungsrichtungen 57 zu bewegen.

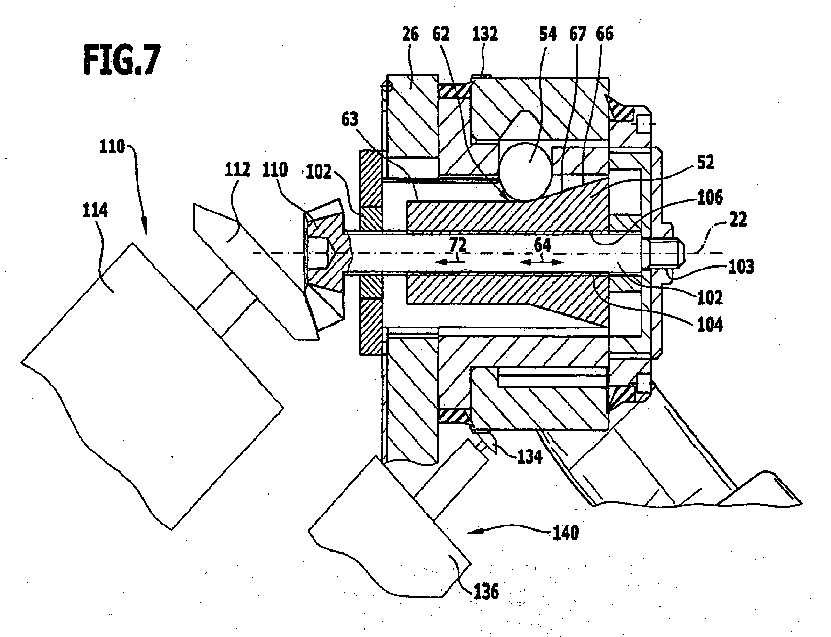

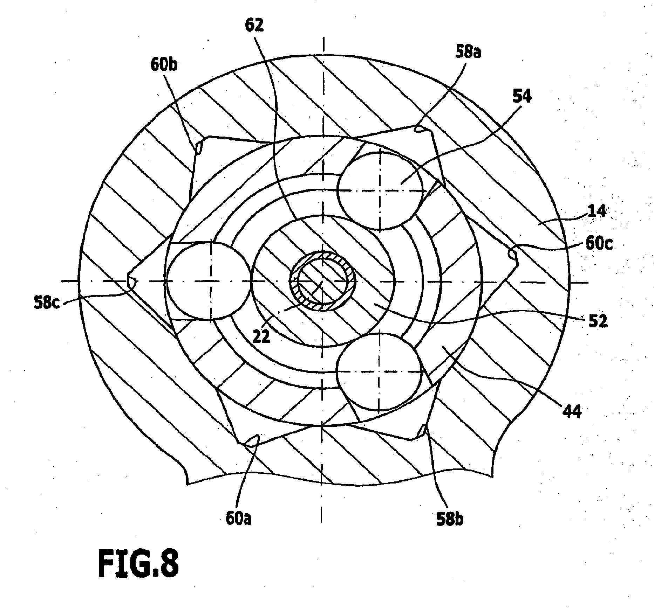

Um die Drehblockierkörper 54 entweder in ihrer Drehblockierstellung durch Beaufschlagen derselben mit den Druckflächen 66 zu halten oder in der Freilaufstellung auf der Rückzugsaufnahme 62 aufliegen zu lassen, ist der Betätigungskörper 52 in der axialen Richtung 64 parallel zur Schwenkachse 22, insbesondere koaxial zu dieser, verschiebbar, und zwar so, dass entweder die Rückzugsaufnahme 62 dem jeweiligen Drehblockierkörper 54 zugewandt ist und diesem, wie in Fig. 7 und 8 dargestellt, in seiner aktiven Stellung die Möglichkeit gibt, in die Führungshülse 44 in Richtung der Rückzugsaufnahme 62 in radialer Richtung zur Schwenkachse 22 hin einzutauchen und den jeweiligen Drehblockierkörpern 54 die Möglichkeit zu eröffnen, die ersten Aufnahmen 58 oder die zweiten Aufnahmen 60 hinsichtlich einer Drehung mitsamt dem Schwenklagerkörper 14 um die Schwenkachse 22 frei zu geben, so dass der Schwenklagerkörper 14 mit dem Kugelhals 10 relativ zur Führungshülse 44 ungehindert und frei drehbar ist, wie in Fig. 7 und 8 dargestellt, wobei in diesem Fall die Drehblockierkörper 54 sich nicht über die Außenmantelfläche 46 der Führungshülse 44 hinaus erstrecken.

Eine Verschiebung des Betätigungskörpers 52 bei auf der jeweiligen Rückzugsaufnahme 62 sitzendem Drehblockierkörper 54 in der Richtung 72 auf die Tragplatte 26 zu bewirkt, dass der jeweilige Drehblockierkörper 54 aus der Rückzugsaufnahme 62 heraus bewegt wird und durch die Druckfläche 66 in seiner Führungsrichtung 57 radial zur Schwenkachse 22 nach außen bewegt wird, somit seine erste Drehblockierstellung erreicht und dabei entweder in die jeweilige erste Aufnahme 58 oder in die jeweilige zweite Aufnahme 60 eintaucht und damit die freie Drehbarkeit des Schwenklagerkörpers 14 unterbindet.

Der Betätigungskörper 52 lässt sich in der Richtung 72 in der axialen Richtung 64 so bewegen, dass auf die Drehblockierkörper 54 zunächst auf Anfangsbereichen 68 der Druckflächen 66 wirken und dann immer weiter radial gegenüber der Schwenkachse 22 außenliegende Bereiche der jeweiligen Druckflächen 66 auf die Drehblockierkörper 54 wirken und diese somit zunehmend, beispielsweise in der Arbeitsstellung A des Kugelhalses 10, in die ersten Aufnahmen 58a, 58b und 58c hineindrücken, wie dies in Fig. 5 und 6 dargestellt ist, um somit eine im Wesentlichen spielfreie Fixierung des Schwenklagerkörpers 14 relativ zum Führungskörper 40, in diesem Fall zur Führungshülse 44, zu erreichen.

In dieser Drehblockierstellung der Drehblockierkörper 54 steht der Betätigungskörper 52 in seiner aktiven Stellung so, dass die Betätigungskörper 52, wie in Fig. 5 und 6 dargestellt, ungefähr auf Zwischenbereichen 76, die zwischen den Anfangsbereichen 68 und den größten radialen Abstand zur Schwenkachse 22 aufweisenden Endbereichen 70 der Druckflächen 66 liegen.

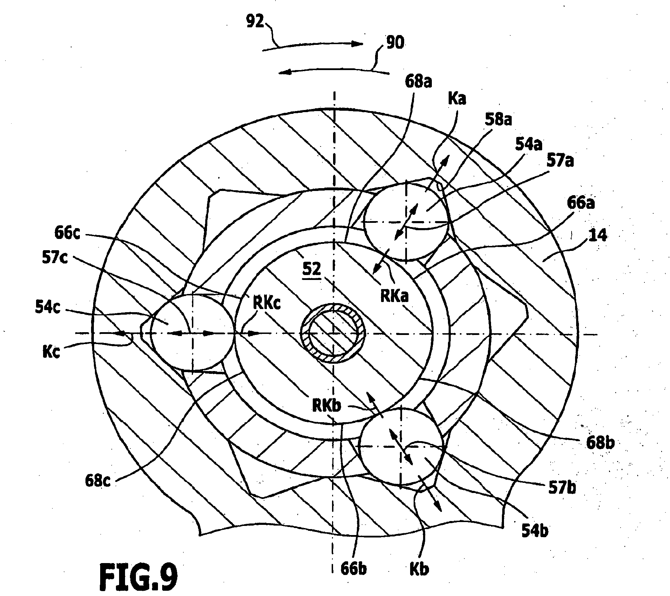

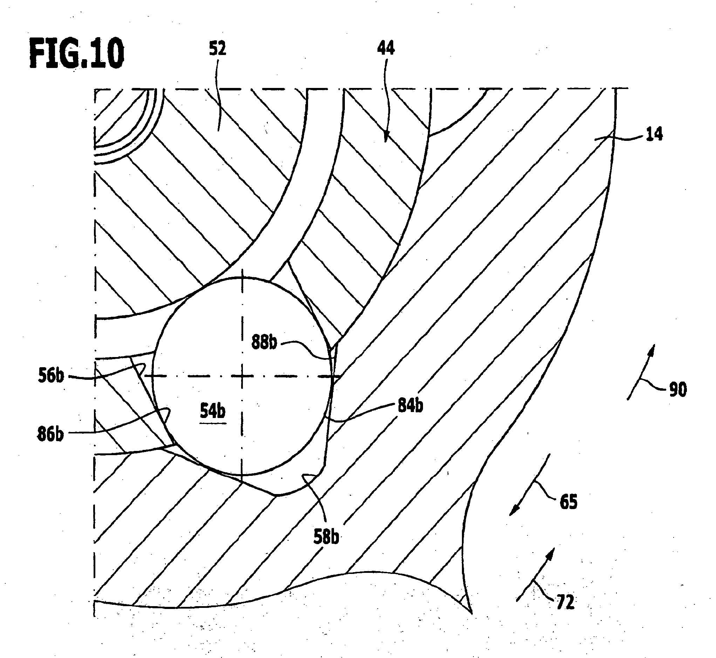

Eine spielfreie Verriegelung des Schwenklagerkörpers 14 durch die in ihrer Drehblockierstellung stehenden Drehblockierkörper 54 lässt sich besonders günstig dann erreichen, wenn der Drehblockierkörper 54 und die Aufnahmen 58 und 60 so gestaltet sind, dass bei zunehmendem Eintauchen eines der Drehblockierkörper 54 in eine der Aufnahmen 58 oder 60 und Anliegen der Drehblockierkörper 54 an einer Seite der Aufnahmen 58 und 60 jeder der Drehblockierkörper 54 mit der wechselwirkenden Aufnahme 58 oder 60 eine Verdrehung des Schwenklagerkörpers 14 bewirkt, wobei insgesamt der Satz von Drehblockierkörpern 54a bis 54c zur spielfreien Fixierung des Schwenklagerkörpers 14 mit in entgegengesetzten Richtungen wirkenden Drehmomenten 90, 92 auf die Gesamtheit der Aufnahmen 58 oder 60 einwirkt. Wie beispielsweise in Fig. 9 bis 12 dargestellt, liegt der Drehblockierkörper 54b mit seiner Außenfläche 84b nur auf einer Seite 86b der Führungsaufnahme 56b an, beispielsweise der in Umlaufrichtung 65 liegenden Seite, und stützt sich mit einem gegenüberliegenden Bereich seiner Außenfläche 84b auf einer entgegengesetzt zur Umlaufrichtung 65 liegenden Seite 88b der Aufnahme 58b ab, wobei eine zunehmende Bewegung des Drehblockierkörpers 54 in radialer Richtung zur Schwenkachse 22 zu einem entgegengesetzt zur Umlaufrichtung 65 wirkenden Drehmoment 90 führt, welches auf den Schwenklagerkörper 14 wirkt (Fig. 10).

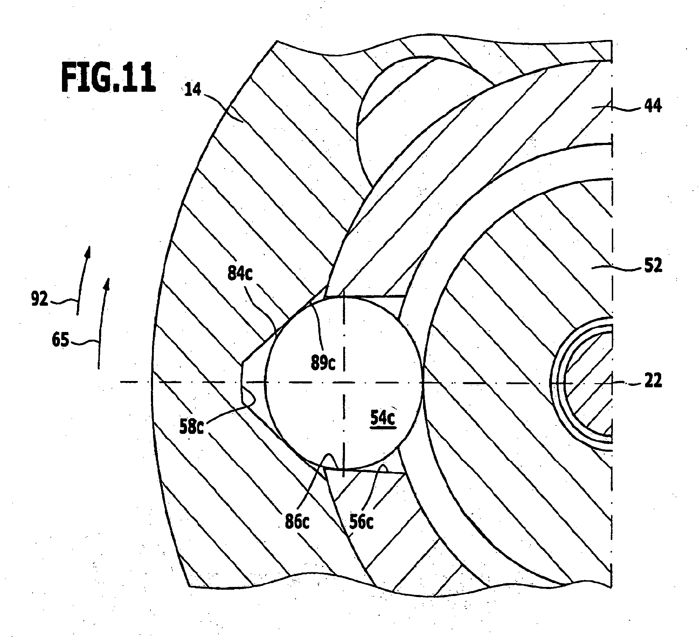

Ferner liegt der Drehblockierkörper 54c mit seiner Außenfläche 84c an einer entgegengesetzt zur Umlaufrichtung 65 liegenden Seite 86c der Führungsaufnahme 56c an und wirkt mit einem gegenüberliegenden Bereich der Außenfläche 84c auf eine Seite 89c der ersten Aufnahme 58c, wodurch ein in Umlaufrichtung 65 wirkendes Drehmoment 92 entsteht, welches auf den Schwenklagerkörper 14 wirkt (Fig. 11).

Somit wirken die durch die Drehblockierkörper 54b und 54c erzeugten Drehmomente 90 und 92 wie in Fig. 9 dargestellt, entgegengesetzt zueinander und erlauben eine spielfreie Festlegung des Schwenklagerkörpers 14 relativ zum Führungskörper 40, insbesondere zur Führungshülse 44 derselben, da durch die jeweils einseitige Anlage der Drehblockierkörper 54 einerseits in der Führungsaufnahme 56 und andererseits in der ersten Aufnahme 58 das Spiel zwischen der Führungsaufnahme 56 und dem Drehblockierkörper 54 sowie der ersten Aufnahme 58 im Bereich beider Drehblockierkörper 54b und 54c eliminiert wird.

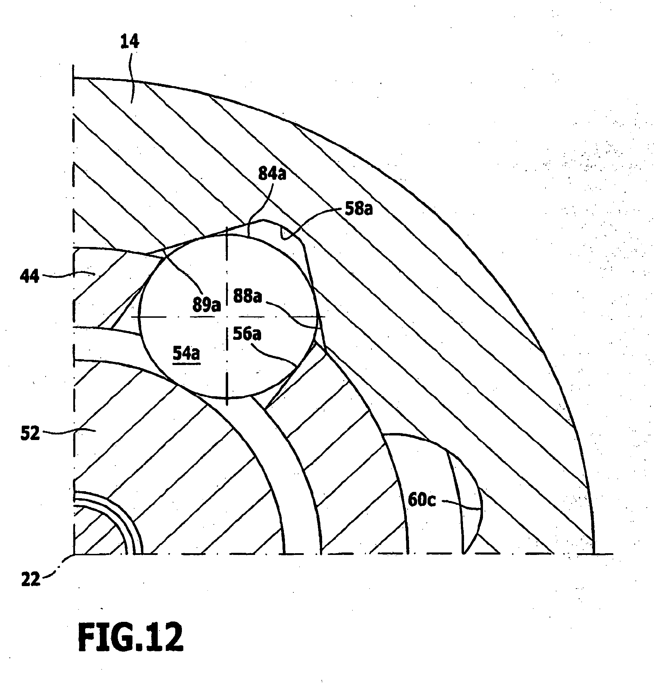

Ferner ist, wie in Fig. 12 dargestellt, beim Drehblockierkörper 54a vorgesehen, dass dieser mit seiner Außenfläche 84a sowohl an der in Umlaufrichtung 65 liegenden Seite 88a als auch an der entgegengesetzt zu dieser Seite liegenden Seite 89a der ersten Aufnahme 58a anliegt, und somit je nach Fertigungstoleranz im Bereich der Führungsaufnahme 56a und der entsprechenden Aufnahme 58a und je nach Belastung des Kugelhalses 10 im Anhängerbetrieb in der Regel zu einem der beiden Drehmomente 90 und 92 beiträgt und somit in der Regel dazu dient, zusätzlich zu dem aufgrund der Belastung des Kugelhalses 10 belasteten Drehblockierkörper 54b oder 54c noch Last aufzunehmen, es kann aber auch ein Zustand auftreten, in dem der Drehblockierkörper 54a zu keinem der beiden Drehmomente 90 und 92 beitragen kann.

Um dem Betätigungskörper 52 die Möglichkeit zu eröffnen, in der Drehblockierstellung jeweils jeden der drei Drehblockierkörper 54 optimal zu beaufschlagen, ist vorgesehen, dass in der aktiven Stellung eine Zentrierung des Betätigungskörpers 52 entsprechend der Lage der Drehblockierkörper 54 erfolgt, so dass sich der Betätigungskörper 52 relativ zur Schwenkachse 22 bewegen und entsprechend der durch Fertigungstoleranzen bedingten Lage der Drehblockierkörper 54 sich innerhalb des Führungskörpers 40 selbstzentrieren kann, wobei die Selbstzentrierung des Betätigungskörpers 52 geringfügig von einer koaxialen Anordnung zur geometrischen Schwenkachse 22 abweichen kann.

Aufgrund der Selbstzentrierung wirken die Drehblockierkörper 54a, 54b und 54c in der jeweiligen Führungsrichtung 57a, 57b und 57c mit ungefähr gleich großen Kräften Ka, Kb und Kc auf die Aufnahmen 58a, 58b und 58c oder 60a, 60b und 60c, so dass auch die auf den Betätigungskörper 52 wirkenden Reaktionskräfte RKa, RKb und RKc ungefähr gleich groß sind.

Bei dem dargestellten Ausführungsbeispiel der erfindungsgemäßen Lösung sind die Drehblockierkörper 54 in den Führungsaufnahmen 56 in gleichen Winkelabständen um die Schwenkachse 22 herum angeordnet, so dass die durch die Selbstzentrierung ungefähr gleich großen Reaktionskräfte RKa, RKb, RKc auf einen der Drehblockierkörper 54a, 54b, 54c sich zu gleichen Teilen auf die anderen Drehblockierkörper 54b und 54c, 54a und 54c sowie 54a und 54b auswirken und sich somit insgesamt aufheben, so dass der Betätigungskörper 52 im Kräftegleichgewicht steht und keine zusätzliche Abstützung benötigt.

Im dargestellten Ausführungsbeispiel sind die Drehblockierkörper 54, wie beispielsweise in den Fig. 5, 7 und 9 dargestellt, als Kugeln ausgebildet. Es besteht aber auch die Möglichkeit, die Drehblockierkörper beispielsweise als Rollen auszubilden.

Zum Bewegen des Betätigungskörpers 52 in der axialen Richtung 64 ist ein Drehblockierantrieb 100 vorgesehen, der eine als Ganzes mit 102 bezeichnete Gewindespindel aufweist, auf welcher der Betätigungskörper 52 sitzt. Die Gewindespindel 102 ist an der Tragplatte 26 beispielsweise über ein Axial-/Radiallager 103 in der axialen Richtung 64 unverschieblich gelagert.

Diese Gewindespindel 102 greift mit einem Außengewinde 104 in ein Innengewinde 106 des Betätigungskörpers 54 ein, der somit gleichzeitig eine Spindelmutter zu der Gewindespindel 102 darstellt. Es besteht die Möglichkeit, die Selbstzentrierung des Betätigungskörpers 52 durch ausreichend großes Spiel zwischen dem Außengewinde 104 und dem Innengewinde 106 zu erreichen.

Durch Drehen der Gewindespindel 102 lässt sich somit der Betätigungskörper 52 in der axialen Richtung 64 verschieben.

Vorzugsweise ist das Axial-/Radiallager 103 so ausgebildet, dass es die Gewindespindel 102 nicht exakt koaxial zur Schwenkachse 22 führt, sondern eine Ausweichbewegung der Gewindespindel 102 quer zur Schwenkachse 22 zulässt, um die bereits beschriebene Selbstzentrierung des Betätigungskörpers 52 in der Führungshülse 44 zu ermöglichen.

Zum Antreiben der Gewindespindel 102 umfasst der Drehblockierantrieb 100 ein auf einer dem Betätigungskörper 52 gegenüberliegenden Seite der Tragplatte 26 sitzendes Antriebsrad 110, welches mit einem Antriebsrad 112 eines elektrischen Antriebsmotors 114 des Drehblockierantriebs 100 in Eingriff steht, wobei der elektrische Antriebsmotor 114 beispielsweise als Elektromotor mit einem Untersetzungsgetriebe ausgebildet ist.

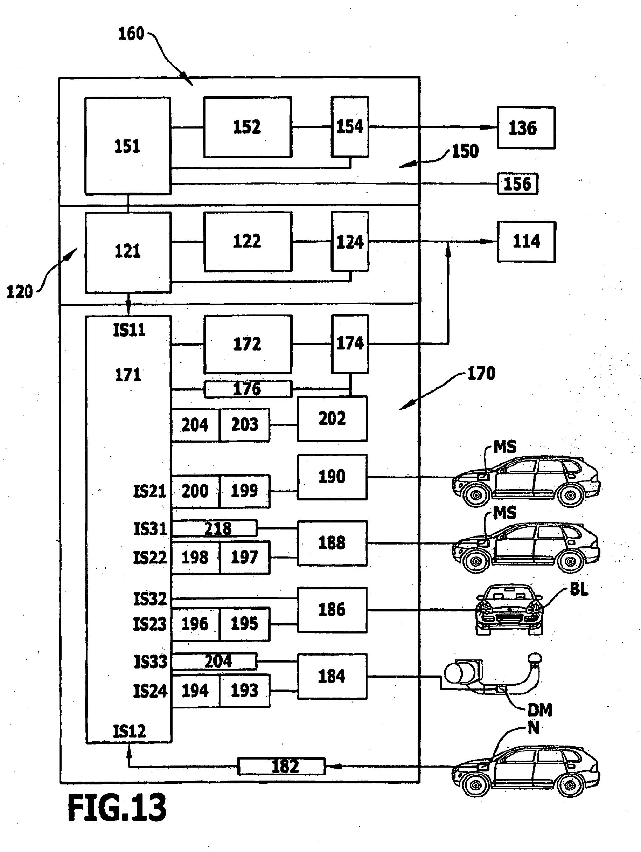

Der elektrische Antriebsmotor 114 des Drehblockierantriebs 100 ist über eine in Fig. 13 dargestellte Drehblockiersteuerung 120 ansteuerbar, welche einen Prozessor 121 und eine Leistungsstufe 122 umfasst, welch letztere den Antriebsstrom für den elektrischen Antriebsmotor 114 erzeugt.

Zwischen der Leistungsstufe 122 und dem elektrischen Antriebsmotor 114 ist zusätzlich noch eine Stromerfassungseinheit 124 der Drehblockiersteuerung 120 vorgesehen, welche den durch den elektrischen Antriebsmotor 114 fließenden Strom erfasst und ein Stromsignal der Drehblockiersteuerung 120 übermittelt.

Ein Verschwenken des Kugelhalses 10 kann in der Freigabestellung der Drehblockiereinrichtung 50 manuell erfolgen.

Bei dem dargestellten ersten Ausführungsbeispiel ist zum Verschwenken des Kugelhalses 10 der Schwenklagerkörper 14 beispielsweise mit einer externen Verzahnung 132 versehen, in welche ein Antriebsrad 134 eines mit einem elektrischen Antriebsmotor 136 versehenen Schwenkantriebs 140 eingreift.

Der Schwenkantrieb 140 ist - wie in Fig. 13 dargestellt - durch eine als Ganzes mit 150 bezeichnete Schwenksteuerung steuerbar, wobei die Schwenksteuerung 150 einen Prozessor 151 umfasst und über eine Leistungsstufe 152 einen Strom zum Betreiben des elektrischen Antriebsmotors 136 erzeugt. Zwischen der Leistungsstufe 152 und dem elektrischen Antriebsmotor 136 ist ferner eine Stromerfassungseinheit 154 vorgesehen, welche den Strom durch den elektrischen Antriebsmotor 136 des Schwenkantriebs 140 erfasst und dem Prozessor 151 der Schwenksteuerung 150 zur Verfügung stellt.

Damit ist die Schwenksteuerung 150 in der Lage, bei Erreichen einer Endstellung, die zum Anstieg des Stroms durch den Elektromotor 136 führt, oder in einem Gefahrenfall, in dem die Bewegung des Kugelhalses 10 durch ein Hindernis blockiert ist, die Bestromung des elektrischen Antriebsmotors 136 durch die Leistungsstufe 152 zu beenden oder zu invertieren.

Beispielsweise sind Funktionen einer derartigen Schwenksteuerung 150 in der europäischen Patentanmeldung 1 002 671 A beschrieben.

Die Drehblockiersteuerung 120 und die Schwenksteuerung 150 sind Teil einer als Ganzes mit 160 bezeichneten Steuerung der Anhängekupplung, die, wie in Fig. 13 dargestellt, in der Lage ist, sowohl den Schwenkantrieb 140 als auch den Drehblockierantrieb 100 so zu steuern, so dass einerseits ein Verschwenken des Kugelhalses 10 von der Arbeitsstellung A in die Ruhestellung R und umgekehrt möglich ist, andererseits in der Arbeitsstellung und/oder der Ruhestellung R durch Überführen der Drehblockiereinrichtung 50 von der Freilaufstellung in die Drehblockierstellung den Schwenklagerkörper 14 in der Arbeitsstellung A bzw. der Ruhestellung R zu fixieren.

Wie in Fig. 13 dargestellt, umfasst die Steuerung 160 nicht nur die Schwenksteuerung 150 und die Drehblockiersteuerung 120, sondern zusätzlich noch eine Verspannsteuerung 170, mit welcher die Steuerung 160 in der Lage ist, die Drehblockiereinrichtung 50 in der Drehblockierstellung zu verspannen, das heißt, die Drehblockierkörper 54 ständig derart zu beaufschlagen, dass sie den Schwenklagerkörper 14 relativ zum Führungskörper 40 spielfrei festlegen, wobei hierzu der Betätigungskörper 52 so zu verschieben ist, dass dieser ständig mit einer Kraft auf den jeweiligen Drehblockierkörper 54 wirkt.

Der Grund für ein derartiges Verspannen des Drehblockierantriebs 50 in der Drehblockierstellung ist der, dass sich bereits ein geringes Spiel zwischen der jeweiligen Außenfläche 84 des jeweiligen Drehblockierkörpers 54 sowie den Seiten 88 oder 89 der Aufnahmen 58 oder den Seiten 86 der Führungsaufnahmen 56 dazu führt, dass Materialdeformationen auftreten, die das Material so weit deformieren, dass sich das Spiel vergrößert.

Liegt jedoch zwischen der Außenfläche 84 und den Seiten 88 oder 89 und den Seiten 86 kein Spiel vor, so wird die Materialdeformation vermieden und somit vermieden, dass sich das Spiel vergrößert und sich im Laufe der Zeit ein Zustand der Drehblockiereinrichtung 50 einstellt, in welchem diese keine spielfreie Fixierung zwischen dem Schwenklagerkörper 14 und dem Führungskörper 40 mehr zulässt.

Um diesen Verspannzustand der Drehblockiereinrichtung 50 zu erreichen, wird der elektrische Antriebsmotor 114 des Drehblockierantriebs 100 durch die Endstufe 122 auch bei Erreichen der Drehblockierstellung so lange betrieben, bis ein ausreichend großes Drehmoment am elektrischen Antriebsmotor 114 auftritt, das durch den Stromsensor 124 erkannt werden kann und bei welchem die Drehblockiersteuerung 120 die Endstufe 122 abschaltet.

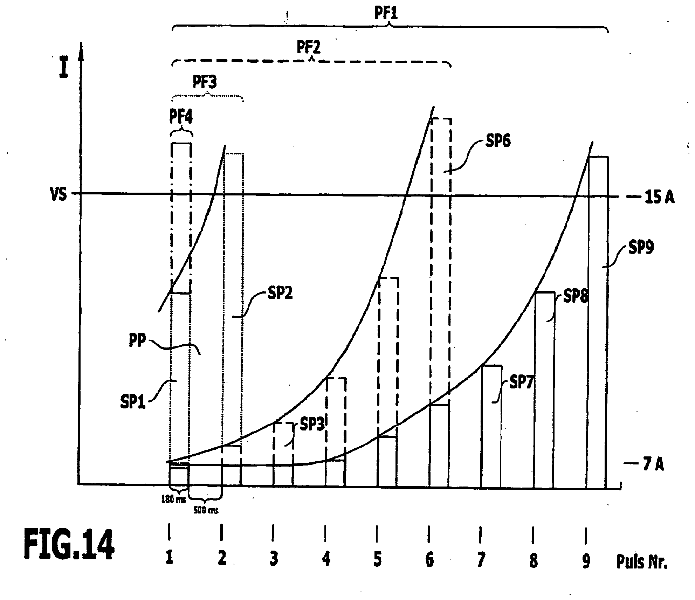

Die Verspannsteuerung 170 umfasst einen Prozessor 171 und eine Endstufe 172, die in einem Verspannbetriebsmodus allerdings keinen Dauerstrom zum Betreiben des elektrischen Antriebsmotors 140 erzeugt, sondern, wie in Fig. 14 dargestellt, einzelne aufeinanderfolgende Strompulse SP, welche durch Pulspausen PP voneinander getrennt sind.

Die Strompulse SP ergeben eine Pulsfolge PF, die allerdings in Abhängigkeit von einer Verspannung beim Übergang in den Verspannbetriebsmodus von unterschiedlicher Dauer sein kann.

Wie in Fig. 14 im Fall der Pulsfolge PF1 dargestellt, umfasst diese Pulsfolge die Strompulse SP1 bis SP9.

Im Fall einer Pulsfolge PF2, dargestellt in Fig. 14, umfasst die Pulsfolge PF2 die Strompulse SP1 bis SP6.

Eine Pulsfolge PF3 umfasst, wie in Fig. 14 dargestellt, die Strompulse SP1 bis SP2.

Eine weitere Pulsfolge PF4 umfasst nur den Strompuls SP1.

Ferner ist in Fig. 13 der Strom I zu den einzelnen Strompulsen SP dargestellt, der bei Anlegen eines derartigen Strompulses SP durch den elektrischen Antriebsmotor 114 fließt. Dieser Strom I wird durch eine Pulsstromerfassungseinheit 174 der Verspannsteuerung 170 erfasst, welche den jeweiligen Stromwert I dem Prozessor 171 übermittelt.

Der Stromwert I, den die Pulsstromerfassungseinheit 174 bei jedem der einzelnen Strompulse SP misst, ist abhängig von dem Verspannungszustand der Drehblockiereinrichtung 50, das heißt abhängig davon, mit welcher Kraft der Betätigungskörper auf die Drehblockierkörper 54 einwirkt.

Ist beispielsweise wie bei in Fig. 14 im Zusammenhang mit der Pulsfolge PF1 dargestellt, zum Zeitpunkt des Übergangs der Verspannsteuerung in den Verspannbetriebsmodus die Verspannung im gesamten Drehblockierantrieb 100 und der Drehblockiereinrichtung 50 gering oder sogar gelöst, so ist der Strom, der beispielsweise während der Strompulse SP1, SP2 und SP3 fließt, ein Strom, wie er bei einer konventionellen Drehbewegung des elektrischen Antriebsmotors 114 beim Verschieben des Betätigungskörpers 52 auftritt.

Erst ab dem Strompuls SP4 steigt der Strom in den Strompulsen SP4, SP5, SP6, SP7, SP8 und SP9 zunehmend an, was bedeutet, dass in der Drehblockiereinrichtung 50 und im gesamten Drehblockierantrieb 100 ein ansteigendes, dem Drehmoment des elektrischen Antriebsmotors 114 Gegendrehmoment aufgebaut wird und somit alle Elemente der Drehblockiereinrichtung 50 und des Drehblockierantriebs 100 in einen gegeneinander zunehmend verspannten Betriebszustand übergehen, so lange, bis beispielsweise der Strompuls SP9 einen einer Verspannschwelle VS entsprechenden Wert von beispielsweise 15 Ampere überschreitet und dann ein Abbrechen der Pulsfolge PF1 eintritt, wobei dann die Verspannsteuerung 170 den Verspannbetriebsmodus verlässt und in einen Interimsmodus übergeht.

Wird dieser Wert VS überschritten, so kann man davon ausgehen, dass das Gegendrehmoment, welches der die Drehblockiereinrichtung 50 und der gesamte Drehblockierantrieb 100 einer Drehbewegung des elektrischen Antriebsmotors 114 entgegensetzen, so groß ist, dass alle Elemente des Drehblockierantriebs 100 sowie die Formschlusselemente 54, 56 und 58 ausreichend stark gegeneinander verspannt sind und somit eine verspannte, spielfreie Fixierung des Schwenklagerkörpers 14 relativ zu der Führungshülse 44 erreicht ist.

Ist dagegen die Verspannung zwischen den Formschlusselementen 54, 56 und 58 sowie im gesamten Drehblockierantrieb 100 beim Übergang der Verspannsteuerung 170 in den Verspannbetriebsmodus größer als in dem Fall, in dem die Pulsfolge PF1 erzeugt wurde, so wird, wie im Zusammenhang mit der Pulsfolge PF2 in Fig. 14 dargestellt, zwar der Strompuls SP1 ebenfalls einen Wert aufweisen, der nahe oder ungefähr bei dem Wert eines normalen Verschiebebetriebs des Betätigungskörpers 52 durch den elektrischen Antriebsmotor 114 liegt, der Strom in den nachfolgenden Strompulsen SP2, SP3, SP4, SP5 und SP6 wird jedoch schneller ansteigen als bei der Pulsfolge PF1.

Das heißt, dass der Stromwert für die Verspannschwelle VS bereits bei dem Strompuls SP6 überschritten wird und somit bereits nach dem Strompuls SP6 ein Abbrechen der Pulsfolge PF2 und ein Übergang vom Verspannbetriebsmodus in den Interimsmodus erfolgt.

Ist die Verspannung der Drehblockiereinrichtung 50 und des Drehblockierantriebs 100 beim Übergang in den Verspannbetriebsmodus sehr groß, so erfolgt im Verspannbetriebsmodus der Verspannsteuerung 170 bereits beim Strompuls SP1 ein Bestromen des elektrischen Antriebsmotors 114 mit einem Strom der signifikant über dem Strom des Antriebsmotors 114 liegt, wie er bei normalem Verschieben des Betätigungselements 52 auftritt und bereits bei dem Strompuls SP2 überschreitet der Strom die Verspannschwelle VS, so dass ein Abbrechen der Pulsfolge PF3 bereits nach dem zweiten Strompuls SP2 erfolgt und die Verspannsteuerung 170 von dem Verspannbetriebsmodus in den Interimsmodus übergeht.

Besonders günstig ist es, wenn die Verspannung der Drehblockiereinrichtung 50 und des Drehblockierantriebs 100 so groß ist, dass die Pulsfolge PF4 nur einen Strompuls SP1 umfasst, bei welchem der Stromwert I bereits über der Verspannschwelle VS liegt, so dass bereits nach dem ersten Strompuls SP1 ein Abbrechen der Pulsfolge eintritt und der Verspannbetriebsmodus beendet wird.

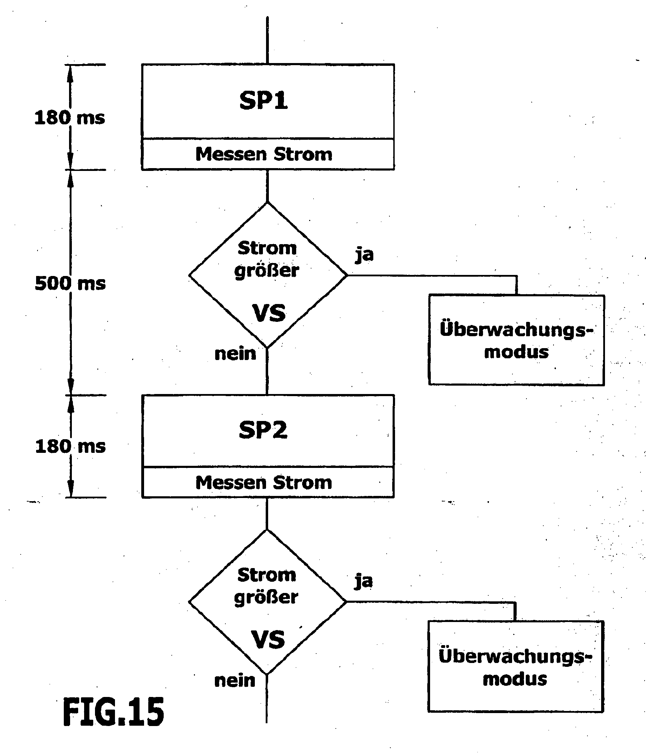

Die Arbeitsweise der Verspannsteuerung 170 im Verspannbetriebsmodus ist in Ergänzung zu Fig. 14 in Fig. 15 schematisch dargestellt.

Wie in Fig. 15 dargestellt, wird bei jedem Strompuls SP von der Stromerfassungseinheit 174 der Strom gemessen, der Stromwert I in einer Komparatoreinheit 176 mit einem Schwellwert VS verglichen und dann entschieden, ob der nächste Strompuls SP erzeugt und im Verspannbetriebsmodus weitergearbeitet wird oder ob die Pulsfolge PF abgebrochen und in den Interimsmodus übergegangen wird.

In dem Interimsmodus der Verspannsteuerung 170 sind die unterschiedlichsten Fahrzustände des mit einer erfindungsgemäßen Anhängekupplung versehenen Kraftfahrzeugs erfassbar.

So ist beispielsweise - wie in Fig. 13 dargestellt -die Verspannsteuerung 170 in der Lage, mit einer Eingangsstufe 182 eine Spannungsänderung im Fahrzeugnetz beim Einschalten der Zündung des Kraftfahrzeugs durch eine Spannungsänderung im Fahrzeugnetz N zu erfassen.

Es ist ebenfalls möglich, mit einer Eingangsstufe 184 beispielsweise ein Lastsignal eines Lastsensors, zum Beispiel eines am Kugelhals 10 angeordneten Dehnungsmessstreifens DM, zu erfassen, der ermittelt, wie groß die auf die Kupplungskugel 18 wirkende Kraft ist.

Mit einer Eingangsstufe 186 ist es möglich, ein Bremsen des Kraftfahrzeugs, beispielsweise durch Erfassen des Stroms in den Bremsleuchten, zu erkennen.

Mit einer Eingangsstufe 188 ist es beispielsweise möglich, Beschleunigungen und/oder Verzögerungen des Kraftfahrzeugs zu erfassen, insbesondere Beschleunigungen und/oder Verzögerungen die über einem definierbaren Schwellwert liegen.

Wird mit der Eingangsstufe 188 eine Geschwindigkeit des Kraftfahrzeugs erfasst, beispielsweise durch ein Geschwindigkeitssignal aus einer Motorsteuerung MS des Kraftfahrzeugs, so hat die Eingangsstufe 188 die Möglichkeit Geschwindigkeitsänderungen, d.h. sowohl Beschleunigungsphasen als auch Verzögerungsphasen des Kraftfahrzeugs, zu erkennen.

Ferner ist es möglich, beispielsweise mit einer Eingangsstufe 190 ein Signal zu erfassen, welches die von dem Kraftfahrzeug gefahrenen Kilometer repräsentiert, wobei dieses Signal entweder von der Motorsteuerung MS oder dem Tachometersystem kommt.

Die einzelnen Fahrzustände des Kraftfahrzeugs können nun von der Steuerung 160, insbesondere in dem Interimsmodus der Verspannsteuerung 170, in unterschiedlichster Art und Weise ausgewertet werden.

Beispielsweise könnte eine mögliche Variante des Interimsmodus vorsehen, dass dieser bei Einschalten der Zündung des Kraftfahrzeugs die Abarbeitung eines Verspannbetriebsmodus seitens der Verspannsteuerung 170 auslöst.

Eine andere mögliche Variante des im Interimsmodus könnte vorsehen, dass die Verspannsteuerung 170 über die Eingangsstufe 190 die gefahrenen Kilometer erfasst und jeweils nach Überschreiten einer bestimmten Anzahl gefahrener Kilometer in den Interimsmodus übergeht.

Eine weitere mögliche Variante des Interimsmodus könnte vorsehen, dass die Verspannsteuerung 170 die Zahl der Bremsvorgänge über die Eingangsstufe 186 erfasst und nach einer bestimmten Anzahl von Bremsvorgängen in den Verspannbetriebsmodus übergeht.

Eine weitere mögliche Variante des Interimsmodus könnte vorsehen, dass diese die Lastwechsel an der Anhängekupplung über die Eingangsstufe 184 erfasst und nach einer bestimmten Anzahl von Lastwechseln in den Verspannbetriebsmodus übergeht.

Da die Durchführung des Verspannbetriebsmodus primär in der Arbeitsstellung lediglich sinnvoll ist, ist vorzugsweise vorgesehen, dass die Schwenksteuerung 150 die Arbeitsstellung A über einen dieser zugeordneten Sensor 156 erkennt, außerdem die Drehblockiersteuerung 120 die das Erreichen der Drehblockierstellung durch Erreichen eines vorgegebenen Stromwerts mit der Stromerfassungseinheit 124 erkennt, und nur bei Erkennen des Erreichens der Arbeitsstellung und einer Drehblockierung des Lagerelements 14 in der Arbeitsstellung A durch Erreichen der Drehblockierstellung der Drehblockiereinrichtung 50 der Verspannsteuerung 170 ein erstes Auslösesignal IS11 übermittelt, wobei die Verspannsteuerung 170 in dem Interimsmodus dann erst nach Übermittlung des ersten Auslösesignals IS11 die Fahrzustände des Kraftfahrzeugs über eine oder mehrere der Eingangsstufen 184 bis 190 erfasst und in Abhängigkeit der von den genannten Größen in den Verspannbetriebsmodus übergeht.

Das Erfassen der Einschaltung der Zündung über die Eingangsstufe 182 kann auch dahingehend ausgenutzt werden, dass das Einschalten der Zündung die Eingangsstufe 182 dazu veranlasst, der Verspannsteuerung 170 ein erstes Auslösesignal IS12 zu erzeugen, wobei die Verspannsteuerung 170 beispielsweise die Betriebszustände des Fahrzeugs nur nach Vorliegen der Auslösesignale IS11 und IS12 durchführt.

Beispielsweise kann dabei nach Vorliegen der Auslösesignale IS11 und IS12 die Erfassung weiterer Fahrzustände erfolgen.

Beispielsweise ist vorgesehen die gefahrenen Kilometer über die Eingangsstufe 190 und eine Zählstufe 199 zu zählen und in einer Komparatorstufe 200 mit einer vorgegebenen Kilometerzahl, beispielsweise von 150 Kilometern, zu vergleichen, wobei die Komparatorstufe 200 bei Überschreiten der vorgegebenen Kilometerzahl ein zweites Auslösesignal IS21 generiert, welches den Verspannbetriebsmodus aktiviert.

Alternativ oder ergänzend besteht schließlich auch die Möglichkeit, aus der Auswertung des Geschwindigkeitssignals des Kraftfahrzeugs, übermittelt durch die Eingangsstufe 188, mittels eine Zählstufe 197 Beschleunigungs- und Verzögerungsvorgänge nach Vorliegen der Auslösesignale IS11 und IS12 in Abhängigkeit von ihrer Intensität, beispielsweise ab einer von Null verschiedenen Mindestbeschleunigung oder einer Mindestverzögerung, zu erfassen in einer Komparatorstufe 198 mit einer vorgegebenen Zahl von Beschleunigungs- und Verzögerungsvorgängen zu vergleichen und nach der vorgegebenen Zahl von Beschleunigungs- und Verzögerungsvorgängen, beispielsweise 50 Beschleunigungs- oder Verzögerungsvorgänge, mit der Mindestintensität durch ein zweites Auslösesignal IS22 den Verspannbetriebsmodus zu aktivieren.

Alternativ oder ergänzend zum Erfassen der Kilometerzahl kann auch ein Erfassen der Bremsvorgänge mittels der Eingangsstufe 186 und einer Zählstufe 195, nach Vorliegen der Auslösesignale IS11 und IS12 erfolgen wobei dann eine Komparatorstufe 196 die Zahl der Bremsvorgänge mit einer bestimmten Zahl von Bremsvorgängen vergleicht und nach Überschreiten der bestimmten Zahl von Bremsvorgängen, beispielsweise von mindestens 100 Bremsvorgängen, über ein zweites Auslösesignal IS23 den Verspannbetriebsmodus aktiviert.

Alternativ oder ergänzend sieht eine weitere Alternative vor, die Lastwechsel an der Kupplungskugel 18 über die Eingangsstufe 184 und eine Zählstufe 193 zu erfassen, und zwar nach Vorliegen der Auslösesignale IS11 und IS12, und die Zahl der Lastwechsel, die über einem definierten, von Null verschiedenen, Schwellwert liegen, in einer Komparatorstufe 194 mit einer Zahl vorgegebener Lastwechsel zu vergleichen und nach Überschreiten der vorgegebenen Zahl von Lastwechseln ein zweites Auslösesignal IS23 zu erzeugen, welches den Verspannbetriebsmodus aktiviert.

Neben der Erfassung der Fahrzustände ist die Verspannsteuerung 170 auch in der Lage, ein Verspannzustand der Drehblockiereinrichtung 50 und des Drehblockierantriebs 100 zu erfassen.

Hierzu ist eine Eingangsstufe 202 vorgesehen, welche in der Lage ist, die Zahl der Strompulse SP sowie den Stromwert I derselben zu erfassen und einer Auswertestufe 203 zu übermitteln, welche entweder nur aus dem Stromwert I und/oder der Zahl der Strompulse SP der Pulsfolge PF eine Wartezeit für das Auslösen des nächsten Verspannbetriebsmodus ermittelt.

Eine Zeitstufe 204 ist dann in der Lage, nach Ablauf der Wartezeit durch ein zweites Auslösesignal IS25 den Verspannbetriebsmodus der Verspannsteuerung 170 zu aktivieren.

Die Wartezeit lässt sich dabei nach den unterschiedlichsten Algorithmen errechnen. Beispielsweise ist es denkbar, die Wartezeit lediglich aus dem Stromwert zu ermitteln, und zwar aus der Differenz des Stromwerts I abzüglich der Verspannschwelle VS. Ein weit über der Verspannschwelle VS liegender Stromwert I bedeutet, dass eine sehr starke Verspannung der Drehblockiereinrichtung 50 und des Drehblockierantriebs 100 erfolgt ist, so dass die Wartezeit groß gewählt werden kann, während ein Stromwert I, der nur geringfügig über der Verspannschwelle VS liegt, bedeutet, dass nach einer kürzeren Wartezeit ein Übergang in den Verspannbetriebsmodus erforderlich ist.

Wird noch die Zahl der Strompulse SP berücksichtigt, so bedeutet eine große Zahl von Strompulsen, dass die Drehblockiereinrichtung 50 sich aufgrund von Betriebsbelastungen sehr weit von einem verspannten Zustand gelöst hat, was wiederum ein Indiz dafür ist, dass nach einer relativ kurzen Wartezeit ein Übergang in den Verspannbetriebsmodus erforderlich ist, während eine möglichst geringe Zahl von Strompulsen SP bedeutet, dass die Drehblockiereinrichtung 50 und der Drehblockierantrieb 100 bereits in einem relativ weitgehend verspannten Zustand waren, so dass eine lange Wartezeit bis zum Auslösen des nächsten Verspannbetriebsmodus möglich ist, während nach einer Vielzahl von Strompulsen nach relativ kurzer Wartezeit ein erneuter Übergang in den Verspannbetriebsmodus erforderlich ist.

Darüber hinaus erfasst die Verspannsteuerung 170 in dem Verspannbetriebsmodus auch Fahrzustände, welche das Verspannen der Drehblockiereinrichtung negativ beeinträchtigen können.

Derartige Fahrzustände sind alle Fahrzustände, bei welchen sehr starke Kräfte auf die Kupplungskugel 18 des Kugelhalses 10 einwirken, so dass sich diese Kräfte auch auf die Drehblockiereinrichtung 50, insbesondere die zusammenwirkenden Formschlusselemente 54, 56, 58 derselben auswirken, wodurch ein Verspannen der Drehblockiereinrichtung 50 nicht in dem gewünschten Maß erfolgen kann.

Daher erfasst beispielsweise die Verspannsteuerung 170 im Verspannbetriebsmodus über die Eingangsstufe 188 Geschwindigkeitsänderungen, deren Größe in einer Komparatorstufe 218 mit einem von Null verschiedenen Schwellwert verglichen wird und bei Überschreiten des Schwellwerts ein Störungssignal IS31 erzeugt wird, welches bewirkt, dass bei einem Auftreten von derart großen Geschwindigkeitsänderungen kein Verspannen mehr erfolgt. Das heißt, dass in dem Verspannbetriebsmodus entweder die gesamte Pulsfolge PF gar nicht mehr erzeugt wird jedoch noch nach Beendigung des Störungssignals IS31 der Verspannbetriebsmodus erneut gestartet wird, oder einzelne Strompulse SP so lange nicht erzeugt werden, so lange starke Beschleunigungen oder Verzögerungen vorliegen.

Alternativ oder ergänzend ist es ebenfalls möglich, ein Bremsen des Fahrzeugs über die, die den Strom der Bremsleuchten BL erfassende Eingangsstufe 186 zu erkennen, und dann, wenn ein Bremsen festgestellt wird, ein Störungssignal IS32 zu erzeugen, so dass entweder die gesamte Pulsfolge PF gar nicht mehr erzeugt wird, jedoch nach Beendigung des Störungssignals IS32 der Verspannbetriebsmodus erneut gestartet wird, oder einzelne Strompulse SP derselben so lange unterdrückt werden, bis kein Bremsen mehr erfolgt.

Schließlich ist es auch denkbar, über die Eingangsstufe 184 die vom Sensor DM gemessene Last zu erfassen und in einer Komparatorstufe 204 mit einem Schwellwert zu vergleichen und bei über dem Schwellwert liegender Last ein Störungssignal IS33 zu erzeugen, so dass dann, wenn derartige starke Belastungen vorliegen, entweder die gesamte Pulsfolge PF gar nicht mehr erzeugt wird, jedoch nach Beendigung des Störungssignals IS32 der Verspannbetriebsmodus erneut gestartet wird, oder einzelne Strompulse SP derselben so lange unterdrückt werden, bis diese starken Belastungen der Kupplungskugel nicht mehr vorliegen.

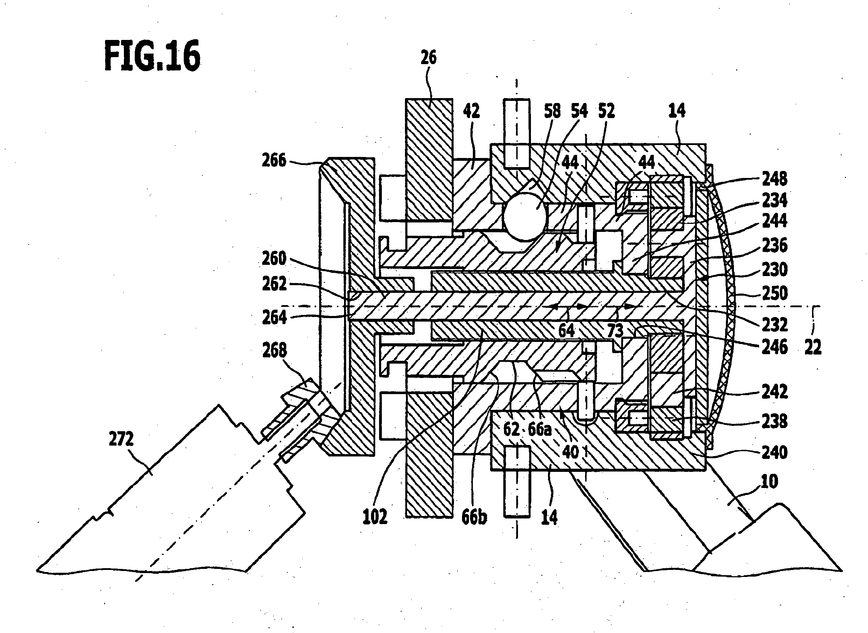

Bei einem zweiten Ausführungsbeispiel einer erfindungsgemäßen Anhängekupplung, dargestellt in Fig. 16, sind diejenigen Merkmale, die mit denen des ersten Ausführungsbeispiels identisch sind, mit denselben Bezugszeichen versehen, so dass auf die Beschreibung derselben vollinhaltlich Bezug genommen werden kann.

Im Gegensatz zum ersten Ausführungsbeispiel ist bei dem zweiten Ausführungsbeispiel der Betätigungskörper 52 beiderseits der Rückzugaufnahme 62 mit sich radial zur Schwenkachse 22 beispielsweise konisch nach außen erweiternden Druckflächen 66a und 66b versehen, die mit denen, die Drehblockierkörper 54 radial nach außen bewegbar sind. Somit sind durch die Rückzugsaufnahme 62 eine Freilaufstellung durch die Druckflächen 66a eine erste Drehblockierstellung und durch die Druckflächen 66b eine zweite Drehblockierstellung realisierbar.

Es besteht die Möglichkeit, ausgehend von der ersten Drehblockierstellung, dargestellt in Fig. 16, in welcher die Drehblockierkörper 54 durch die Druckflächen 66 radial nach außen in die Aufnahmen 58 gedrückt sind, durch Verschieben des Betätigungskörpers 52 in der axialen Richtung 64, und zwar in einer Richtung 73 von der Tragplatte 26 weg, den durch die erste Drehblockierstellung verriegelten Zustand des Schwenklagerkörpers 14 zu lösen, nämlich dadurch, dass, wie in Fig. 15 dargestellt, die Drehblockierkörper 54 die Möglichkeit haben, in die Rückzugsaufnahmen 62 und somit in die Freilaufstellung überzugehen, in der sie sich so weit in die Führungshülse 44 hineinbewegen, dass der Schwenklagerkörper 14 frei auf der Führungshülse 44 drehbar ist.

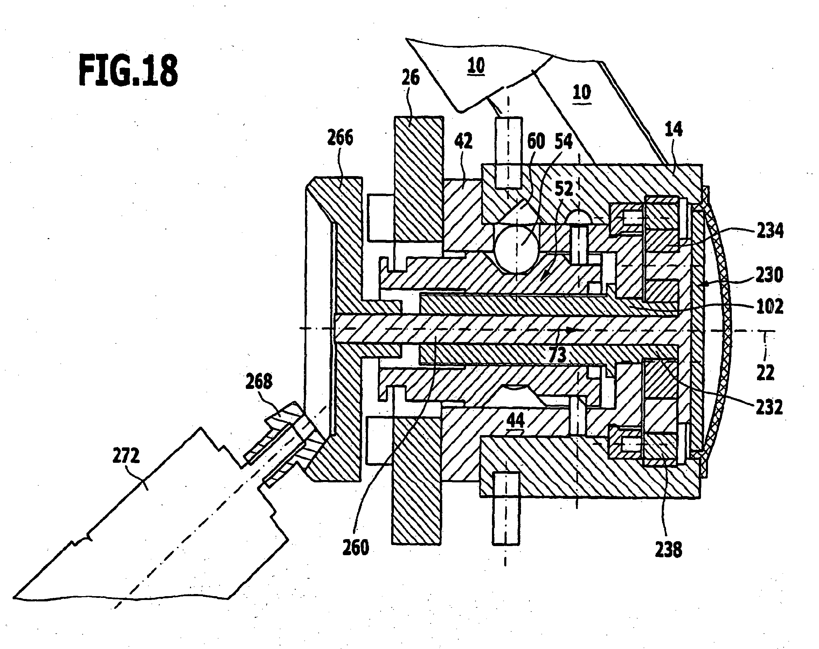

In dieser entriegelnden Stellung des Schwenklagerkörpers 14 kann dieser frei um die Schwenkachse 22 verschwenkt werden und es besteht die Möglichkeit, beispielsweise den Kugelhals 10 von der Arbeitsstellung A, dargestellt in Fig. 16 in die Ruhestellung R zu überführen, in welcher der Kugelhals 10 sich ungefähr auf einer der Arbeitsstellung A gegenüberliegenden Seite der Schwenkachse 22 erstreckt, wie dies in Fig. 18 dargestellt ist.

In dieser Ruhestellung R stehen dann die Aufnahmen 60 wiederum den Drehblockierkörpern 54 gegenüber und es besteht die Möglichkeit, durch weiteres Verschieben des Betätigungskörpers 52 in der Richtung 73 mittels der Druckflächen 66b die Drehblockierkörper 54 wiederum radial nach außen, in die Aufnahmen 60 hineinzubewegen und somit wiederum die bereits beschriebene, formschlüssige Verriegelung des Schwenklagerkörpers 14 zur Führungshülse 40 durch Erreichen der zweiten Drehblockierstellung zu erhalten.

Im Gegensatz zum ersten Ausführungsbeispiel erfolgt der Antrieb der Gewindespindel 102 nicht direkt über den Verriegelungsantrieb 114 sondern über ein Planetengetriebe 230, welches auf einer der Tragplatte 26 abgewandten Seite des Betätigungskörpers 52 angeordnet ist.

Das Planetengetriebe 230 umfasst ein Sonnenrad 232, welches drehfest mit der Gewindespindel 102 verbunden ist, vorzugsweise einstückig an diese angeformt ist.

Das Sonnenrad 232 wird dabei angetrieben durch Planetenräder 234, die an einem Planetenradträger 236 drehbar gelagert sind.

Die Planetenräder 234 kämmen auf ihrer radial innen liegenden Seite mit dem Sonnenrad 232 und auf ihrer radial außen liegenden Seite mit einem Hohlrad 238, das drehfest mit dem Schwenklagerkörper 14 verbunden ist. Vorzugsweise erstreckt sich hierzu der Schwenklagerkörper 14 mit seiner der Tragplatte 26 abgewandten Seite über die Führungshülse 44 hinaus mit einem hülsenähnlichen Abschnitt 240, welcher einen Innenraum 242 umschließt, in welchem das Planetengetriebe 230 angeordnet ist.

Dabei sitzt das Hohlrad 238 des Planetengetriebes 230 unmittelbar auf einer Innenseite des hülsenähnlichen Abschnitts 240 des Schwenklagerkörpers 14 und ist drehfest mit diesem verbunden.

Der Innenraum 242 ist ferner in Richtung der Tragplatte 26 begrenzt durch eine Abschlusswand 244 des Führungskörpers 44, welche ein Axial- und Radiallager 246 zur Lagerung der Gewindespindel 102 trägt und andererseits begrenzt durch einen eine äußere Öffnung 248 des hülsenähnlichen Abschnitts 240 des Schwenklagerkörpers 14 verschließenden Deckel 250 der den Innenraum 242 auf einer der Abschlusswand 244 gegenüberliegenden Seite des Planetengetriebes 230 abschließt.

Ein Antrieb des Planetengetriebes 230 erfolgt über einen Antrieb des Planetenradträgers 236, der einstückig mit einer Antriebswelle 260 verbunden ist, die von dem Planetenradträger 236 durch eine zentrale Bohrung 262 der Gewindespindel 102 und somit koaxial durch diese hindurchgeführt ist, und dabei von dem Innenraum 242 durch die Gewindespindel 102 und somit auch zentral durch den Betätigungskörper 52 bis zu einer dem Betätigungskörper 52 gegenüberliegenden Seite der Tragplatte 26 geführt ist und an ihrem auf der dem Betätigungskörper 52 gegenüberliegenden Seite der Tragplatte angeordneten Ende 264 ein Antriebsrad 266 trägt, welches mit einem Abtriebsrad 268 eines elektrischen Antriebsmotors 272 kämmt, wobei der elektrische Antriebsmotor 272, die Antriebsräder 266 und 268, Antriebswelle 260 und das Planetengetriebe 230 einen Gesamtantrieb 270 bilden.

Das Planetengetriebe 230 erlaubt nun einen Wechsel zwischen einem Antrieb des Schwenklagerkörpers 14 durch Antreiben des Hohlrades 238 und einem Antrieb der Gewindespindel 102 durch Antrieb des Sonnenrades 232 seitens der Planetenräder 234, die durch Drehen des Planetenradträgers 236 um die Schwenkachse 22 umlaufend bewegbar sind.

Der Wechsel zwischen einem Antrieb der Gewindespindel 100 und einem Antrieb des Hohlrades 158 erfolgt dabei - wie bei einem Planetengetriebe üblich - abhängig davon, ob eine Drehbewegung des Hohlrades 238 oder eine Drehbewegung des Sonnenrades 232 blockiert ist.

In der verriegelten Stellung des Schwenklagerkörpers 14, dargestellt in Fig. 16, ist das Hohlrad 238 in hinsichtlich einer Drehbewegung um die Schwenkachse 22 blockiert, da der drehfest mit dem Hohlrad 158 verbundene Schwenklagerkörper 14 auf dem Führungskörper 40 durch die Drehblockierkörper 54 drehfest festgelegt ist, die auf den Druckflächen 66a des in seiner ersten Drehblockierstellung stehenden Betätigungskörpers 52 aufsitzen.

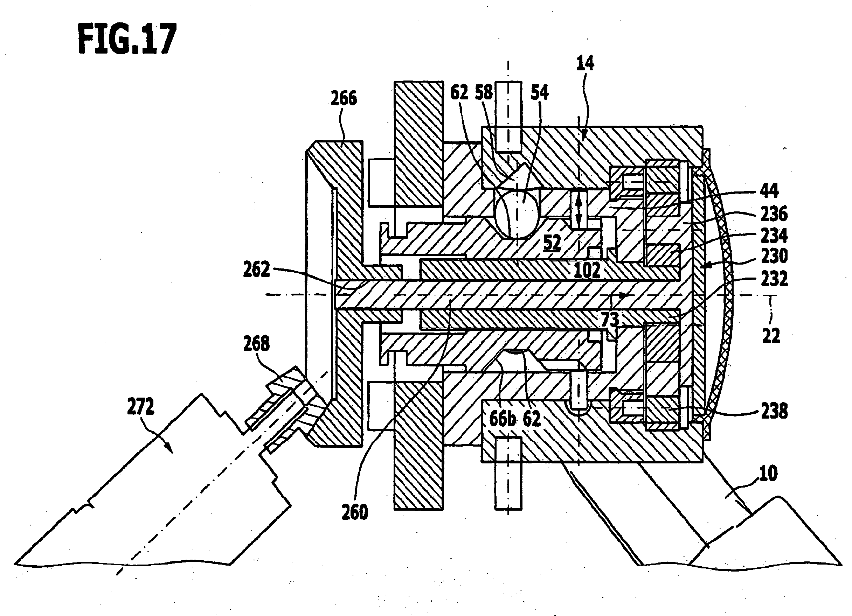

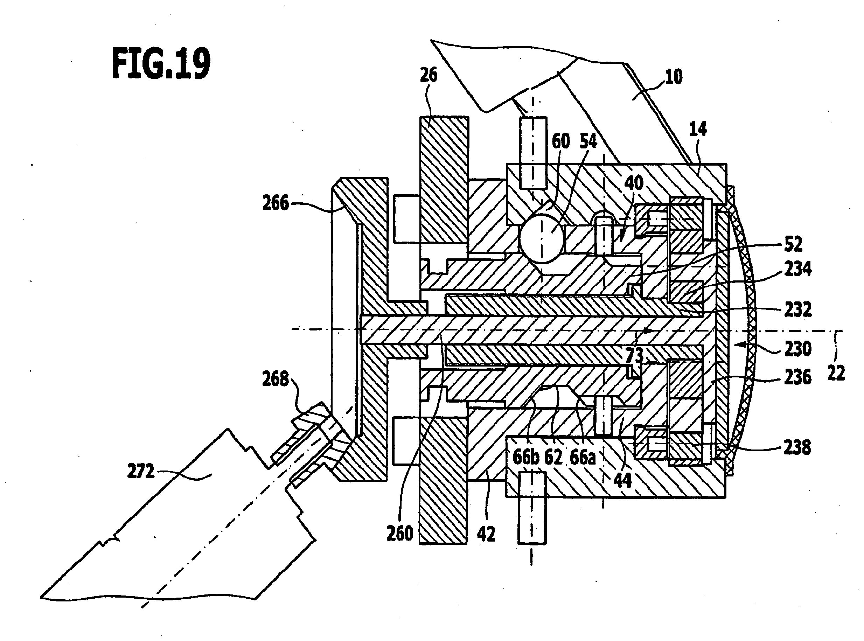

Aus diesem Grund bewirkt ein Antreiben des Planetenradträgers 236 eine Drehbewegung des Sonnenrades 232 mit der für ein Planetengetriebe üblichen Untersetzung, so dass dadurch die Gewindespindel 102 derart antreibbar ist, dass diese den Betätigungskörper 52 in der Richtung 73 bewegt, und zwar so lange, bis, wie in Fig. 17 dargestellt, in der Freilaufstellung des Betätigungskörpers 52 die Drehblockierkörper 54 auf der Rückzugsaufnahme 62 aufliegen. Damit geben die Drehblockierkörper 54 die Drehbewegung des Schwenklagerkörpers 14 relativ zum Führungskörper 40 frei (Fig. 18) und dieser ist nun in der Lage, sich um die Schwenkachse 22 zu drehen, was zur Konsequenz hat, dass auch das Hohlrad 238 nicht mehr drehfest stehen bleibt, sondern die Möglichkeit hat, sich ebenfalls zu drehen. Eine erneute Verriegelung erfolgt dann in der Ruhestellung, wie in Fig. 19 dargestellt.

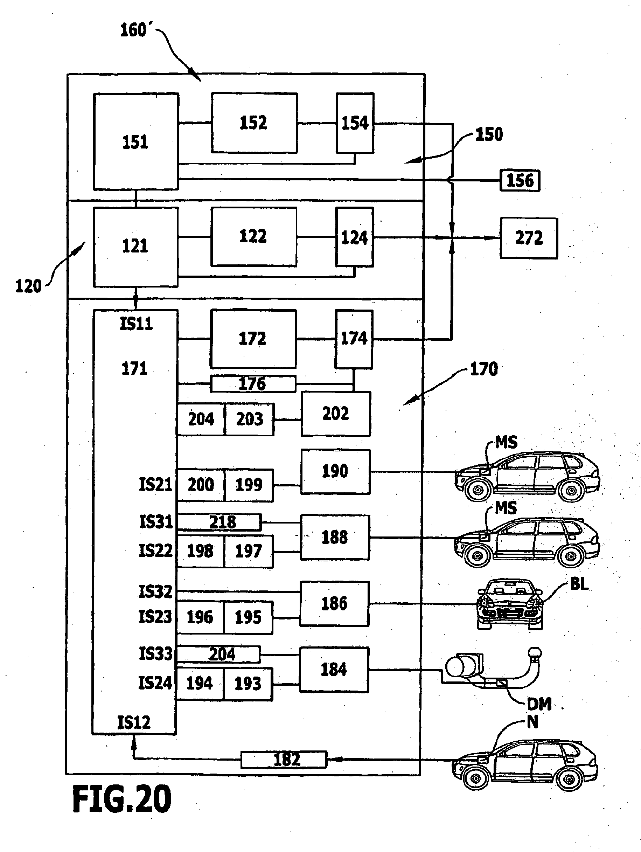

Die in Fig. 20 dargestellte Steuerung 160' ist bei dem zweiten Ausführungsbeispiel so ausgebildet, dass sowohl die Endstufe 152 der Schwenksteuerung 150 als auch die Endstufe 122 der Drehblockiersteuerung 120 und auch die Endstufe 172 der Verspannsteuerung 170 den elektrischen Antriebsmotor 272 bestromen.

Im Übrigen sind beim zweiten Ausführungsbeispiel die identischen Funktionen und Betriebsweisen wie beim ersten Ausführungsbeispiel realisierbar, so dass diesbezüglich vollinhaltlich auf die Ausführungen zum ersten Ausführungsbeispiel Bezug genommen wird.

## Patentansprüche

1. Anhängekupplung für Kraftfahrzeuge umfassend einen Kugelhals (10), der an einem Ende (16) eine Kupplungskugel (18) trägt und an einem anderen Ende (12) mit einem Schwenklagerkörper (14) verbunden ist, eine Schwenklagereinheit (20), mit welcher der Schwenklagerkörper (14) um mindestens eine Schwenkachse (22) zwischen definierten Stellungen (A, R) schwenkbar ist, und eine Drehblockiereinrichtung (50), mit welcher der Schwenklagerkörper (14) relativ zur Schwenklagereinheit (20) in mindestens einer der Stellungen durch zusammenwirkende Formschlusselemente (54, 56, 58) blockierbar ist und einen Drehblockierantrieb (100) mit einer Drehblockiersteuerung (120) zum Bewegen der Formschlusselemente (54, 56, 58) zwischen einer Drehblockierstellung und einer Freilaufstellung,
**dadurch gekennzeichnet, dass** der Drehblockierantrieb (100) mit einer Verspannsteuerung (170) versehen ist, welche zum spielfreien Verspannen der in der Drehblockierstellung stehenden Formschlusselemente (54, 56, 58) der Drehblockiereinrichtung (50) in einem Verspannbetriebsmodus einen elektrischen Antriebsmotor (114, 272) des Drehblockierantriebs (100) bis zum Erreichen eines einem spielfreien Verspannen der Formschlusselemente (54, 56, 58) entsprechenden Verspanndrehmoments betreibt, dass die Verspannsteuerung (170) das Erreichen des Verspanndrehmoments durch eine Strommessung des Stroms durch den elektrischen Antriebsmotor (114, 272) umfasst, und dass die Verspannsteuerung (170) einen Strompulsgenerator (172) aufweist, welcher in dem Verspannbetriebsmodus den elektrischen Antriebsmotor (114) mit einer Pulsfolge (PF) aus einzelnen Strompulsen (SP) betreibt.

2. Anhängekupplung nach Anspruch 1, **dadurch gekennzeichnet, dass** die Verspannsteuerung (170) mit einer Pulsstromerfassungseinheit (174) zum Messen des Stroms der einzelnen Strompulse (SP) versehen ist, und dass die Verspannsteuerung (170) in dem Verspannbetriebsmodus bei jedem einzelnen Strompuls (SP) der Pulsfolge (PF) den Stromwert (I) des durch den elektrischen Antriebsmotor (114, 272) fließenden Stroms erfasst.

3. Anhängekupplung nach einem der voranstehenden Ansprüche, **dadurch gekennzeichnet, dass** die Anhängekupplung mit einer die Drehblockiersteuerung (120) und die Verspannsteuerung (170) umfassenden Steuerung (160) versehen ist und dass die Steuerung (160) das Erreichen der Drehblockierstellung durch die Formschlusselemente (54, 56, 58) beim Übergang von der Freigabestellung in die Drehblockierstellung erfasst und dass das Erreichen der Drehblockierstellung ein erstes Auslösesignal für den Start eines Interimsmodus der Verspannsteuerung (170) auslöst.

4. Anhängekupplung nach einem der voranstehenden Ansprüche, **dadurch gekennzeichnet, dass** die Anhängekupplung mit einer die Drehblockiersteuerung (120) und die Verspannsteuerung (170) umfassenden Steuerung (160) versehen ist und dass die Steuerung (160) das Einschalten einer Zündung des Kraftfahrzeugs erfasst, und dass bei Einschalten der Zündung des Kraftfahrzeugs die Steuerung (160) ein erstes Auslösesignal für den Start eines Interimsmodus der Verspannsteuerung (170) erzeugt.

5. Anhängekupplung nach einem der voranstehenden Ansprüche, **dadurch gekennzeichnet, dass** die Verspannsteuerung (170) nach Beendigung des Verspannbetriebsmodus ein erstes Auslösesignal für den Start eines Interimsmodus der Verspannsteuerung (170) erzeugt.

6. Anhängekupplung nach einem der Ansprüche 3 bis 5, **dadurch gekennzeichnet, dass** die Verspannsteuerung (170) im Interimsmodus ein Kilometersignal erfasst, dass Bei Überschreiten einer bestimmten Kilometerzahl nach dem ersten Auslösesignal (IS1) ein zweites Auslösesignal (IS2) zum Start des Verspannbetriebsmodus erzeugt.

7. Anhängekupplung nach einem der Ansprüche 3 bis 6, **dadurch gekennzeichnet, dass** die Verspannsteuerung (170) im Interimsmodus Bremsvorgänge des Kraftfahrzeugs erfasst und nach einer vorgegebenen Zahl von Bremsvorgängen nach dem ersten Auslösesignal (IS1) ein zweites Auslösesignal (IS2) zum Start des Verspannbetriebsmodus erzeugt.

8. Anhängekupplung nach einem der Ansprüche 3 bis 7, **dadurch gekennzeichnet, dass** die Verspannsteuerung (170) im Interimsmodus den Geschwindigkeitsverlauf des Kraftfahrzeugs erfasst und Geschwindigkeitsänderungen ermittelt und bei Überschreiten einer bestimmten Zahl von Geschwindigkeitsänderungen nach dem ersten Auslösesignal (IS1) ein zweites Auslösesignal (IS2) zum Start des Verspannbetriebsmodus erzeugt.

9. Anhängekupplung nach einem der Ansprüche 3 bis 8, **dadurch gekennzeichnet, dass** die Verspannsteuerung (170) über einen Sensor Lastwechsel am Kugelhals (10) ermittelt und bei Überschreiten einer bestimmten Zahl von Lastwechseln nach dem ersten Auslösesignal (IS1) ein zweites Auslösesignal (IS2) zum Start des Verspannbetriebsmodus erzeugt.

10. Anhängekupplung nach einem der Ansprüche 3 bis 9, **dadurch gekennzeichnet, dass** die Verspannsteuerung (170) im Interimsmodus nach Ablauf einer Wartezeit ein zweites Auslösesignal zum Start des Verspannbetriebsmodus erzeugt.

11. Anhängekupplung nach einem der voranstehenden Ansprüche, **dadurch gekennzeichnet, dass** die Verspannsteuerung die Wartezeit in Abhängigkeit von dem Verspannzustand ermittelt.

12. Anhängekupplung nach einem der voranstehenden Ansprüche, **dadurch gekennzeichnet, dass** die Verspannsteuerung (170) im Verspannbetriebsmodus eine Bestromung des elektrischen Antriebsmotors (114, 272) bei Vorliegen eines belastungsintensiven Fahrzustandes des Kraftfahrzeugs aussetzt.

13. Anhängekupplung nach Anspruch 12, **dadurch gekennzeichnet, dass** die Verspannsteuerung (170) eine Last am Kugelhals (10) mit einem Sensor (DM) erfasst und bei Überschreiten eines Schwellwertes der Last einen belastungsintensiven Fahrzustand erkennt.

14. Kraftfahrzeug umfassend eine Karosserie und eine Anhängekupplung, **dadurch gekennzeichnet, dass** die Anhängekupplung nach einem der voranstehenden Ansprüche ausgebildet ist.

## Claims

1. Trailer coupling for motor vehicles comprising a ball neck (10) bearing a coupling ball (18) at one end and being connected at another end (12) to a pivot bearing member (14), a pivot bearing unit (20) for pivoting the pivot bearing member (14) about at least one pivot axis (22) between defined positions (A, R) and a rotation blocking device (50) for locking the pivot bearing body (14) relative to the pivot bearing unit (20) in at least one of the positions by way of interacting form locking elements (54, 56, 58) and a rotation blocking drive (100) with a rotation blocking control (120) for moving the form locking elements (54, 56, 58) between a rotation blocking position and a freewheeling position,
**characterized in that** for the clearance-free clamping of the form locking elements (54, 56, 58) of the rotation blocking device (50) in the rotation blocking position the rotation blocking drive (100) is provided with a clamping control (170) operating an electric drive motor (114, 272) of the rotation blocking drive (100) in a clamping operation mode until a clamping torque corresponding to a clearance-free clamping of the form locking elements (54, 56, 58) is reached, that the clamping control (170) ascertains when the clamping torque has been reached by measuring the current through the electric drive motor (114, 272), and that the clamping control (170) has a current pulse generator (172) operating the electric drive motor (114) in the clamping operation mode with a pulse sequence (PF) consisting of individual current pulses (SP).

2. Trailer coupling as defined in claim 1, **characterized in that** the clamping control (170) is provided with a pulse current detecting unit (174) for measuring the current of the individual current pulses (SP) and that in the clamping operation mode the clamping control (170) detects the current value (I) of the current flowing through the electric drive motor (114, 272) for each individual current pulse (SP) of the pulse sequence (PF).

3. Trailer coupling as defined in any one of the preceding claims, **characterized in that** the trailer coupling is provided with a control (160) comprising the rotation blocking control (120) and the clamping control (170) and that the control (160) detects when the form locking elements (54, 56, 58) have reached the rotation blocking position during the transition from the release position into the rotation blocking position and that when the rotation blocking position is reached a first trigger signal for the start of an interim mode of the clamping control (170) is triggered.

4. Trailer coupling as defined in any one of the preceding claims, **characterized in that** the trailer coupling is provided with a control (160) comprising the rotation blocking control (120) and the clamping control (170) and that the control (160) detects the switching on of an ignition of the motor vehicle and that when the ignition of the motor vehicle is switched on the control (160) generates a first trigger signal for the start of an interim mode of the clamping control (170).

5. Trailer coupling as defined in any one of the preceding claims, **characterized in that** the clamping control (170) generates a first trigger signal for the start of an interim mode of the clamping control (170) following termination of the clamping operation mode.

6. Trailer coupling as defined in any one of claims 3 to 5, **characterized in that** in the interim mode the clamping control (170) detects a kilometre signal, that when a specific number of kilometres is exceeded following the first trigger signal (IS1) a second trigger signal (IS2) is generated for the purpose of starting the clamping operation mode.

7. Trailer coupling as defined in any one of claims 3 to 6, **characterized in that** in the interim mode the clamping control (170) detects braking procedures of the motor vehicle and following a predetermined number of braking procedures following the first trigger signal (IS1) a second trigger signal (IS2) is generated for the purpose of starting the clamping operation mode.

8. Trailer coupling as defined in any one of claims 3 to 7, **characterized in that** in the interim mode the clamping control (170) detects the course of the speed of the motor vehicle and determines changes in speed and when a specific number of changes in speed are exceeded following the first trigger signal (IS1) a second trigger signal (IS2) is generated for the purpose of starting the clamping operation mode.

9. Trailer coupling as defined in any one of claims 3 to 8, **characterized in that** the clamping control (170) determines changes in load on the ball neck (10) via a sensor and when a specific number of load changes are exceeded following the first trigger signal (IS1) a second trigger signal (IS2) is generated for the purpose of starting the clamping operation mode.

10. Trailer coupling as defined in any one of claims 3 to 9, **characterized in that** in the interim mode the clamping control (170) generates a second trigger signal for the purpose of starting the clamping operation mode at the end of a waiting time.

11. Trailer coupling as defined in any one of the preceding claims, **characterized in that** the clamping control determines the waiting time as a function of the clamping state.

12. Trailer coupling as defined in any one of the preceding claims, **characterized in that** in the clamping operation mode the clamping control (170) suspends current flow to the electric drive motor (114, 272) when a load-intensive driving state of the motor vehicle is present.

13. Trailer coupling as defined in claim 12, **characterized in that** the clamping control (170) detects a load on the ball neck (10) with a sensor (DM) and when a threshold value of the load is exceeded recognizes a load-intensive driving state.

14. Motor vehicle comprising a body and a trailer coupling, **characterized in that** the trailer coupling is designed in accordance with any one of the preceding claims.

## Revendications

1. Attelage pour des véhicules automobiles comprenant un col de boule (10) qui porte sur une extrémité (16) une boule d'attelage (18) et est relié sur une autre extrémité (12) à un corps de palier de pivotement (14), une unité de palier de pivotement (20), avec laquelle le corps de palier de pivotement (14) peut être pivoté autour d'au moins un axe de pivotement (22) entre des positions définies (A, R), et un dispositif de blocage de rotation (50), avec lequel le corps de palier de pivotement (14) peut être bloqué par rapport à l'unité de palier de pivotement (20) dans au moins l'une des positions par des éléments à complémentarité de formes (54, 56, 58) concourants et un entraînement de blocage de rotation (100) avec une commande de blocage de rotation (120) pour le déplacement des éléments à complémentarité de formes (54, 56, 58) entre une position de blocage de rotation et une position en roue libre,
**caractérisé en ce que** l'entraînement de blocage de rotation (100) est pourvu d'une commande de serrage (170) qui actionne, pour le serrage sans jeu des éléments à complémentarité de formes (54, 56, 58) se trouvant dans la position de blocage de rotation du dispositif de blocage de rotation (50) dans un mode de serrage, un moteur d'entraînement (114, 272) électrique de l'entraînement de blocage de rotation (100) jusqu'à atteindre un couple de serrage correspondant à un serrage sans jeu des éléments à complémentarité de formes (54, 56, 58), que la commande de serrage (170) comporte l'atteinte du couple de serrage par une mesure de courant du courant par le moteur d'entraînement (114, 272) électrique, et que la commande de serrage (170) présente un générateur d'impulsions de courant (172) qui actionne dans le mode de serrage le moteur d'entraînement (114) électrique avec une suite (PF) d'impulsions de courant individuelles (SP).

2. Attelage selon la revendication 1, **caractérisé en ce que** la commande de serrage (170) est pourvue d'une unité de détection de courant d'impulsion (174) pour la mesure du courant des impulsions de courant individuelles (SP) et **en ce que** la commande de serrage (170) détecte, dans le mode de serrage à chaque impulsion de courant individuelle (SP) de la suite (PF) d'impulsions, la valeur (I) du courant passant par le moteur d'entraînement (114, 272) électrique.

3. Attelage selon l'une quelconque des revendications précédentes, **caractérisé en ce que** l'attelage est pourvu d'une commande (160) comportant la commande de blocage de rotation (120) et la commande de serrage (170) et **en ce que** la commande (160) détecte l'atteinte de la position de blocage de rotation par les éléments à complémentarité de formes (54, 56, 58) lors du passage de la position de libération à la position de blocage de rotation et **en ce que** l'atteinte de la position de blocage de rotation déclenche un premier signal de déclenchement pour le démarrage d'un mode intérimaire de la commande de serrage (170).

4. Attelage selon l'une quelconque des revendications précédentes, **caractérisé en ce que** l'attelage est pourvu d'une commande (160) comportant la commande de blocage de rotation (120) et la commande de serrage (170) et **en ce que** la commande (160) détecte l'activation d'un allumage du véhicule automobile, et **en ce que** la commande (160) génère un premier signal de déclenchement pour le démarrage d'un mode intérimaire de la commande de serrage (170) lors de l'activation de l'allumage du véhicule automobile.

5. Attelage selon l'une quelconque des revendications précédentes, **caractérisé en ce que** la commande de serrage (170) génère à la fin du mode de serrage un premier signal de déclenchement pour le démarrage d'un mode intérimaire de la commande de serrage (170).

6. Attelage selon l'une quelconque des revendications 3 à 5, **caractérisé en ce que** la commande de serrage (170) détecte dans le mode intérimaire un signal kilométrique, **en ce que** lors du dépassement d'un nombre kilométrique déterminé après le premier signal de déclenchement (IS1) celle-ci génère un second signal de déclenchement (IS2) pour le démarrage du mode de serrage.

7. Attelage selon l'une quelconque des revendications 3 à 6, **caractérisé en ce que** la commande de serrage (170) détecte dans le mode intérimaire des processus de freinage du véhicule automobile et après un nombre prédéterminé de processus de freinage après le premier signal de déclenchement (IS1) génère un second signal de déclenchement (IS2) pour le démarrage du mode de serrage.

8. Attelage selon l'une quelconque des revendications 3 à 7, **caractérisé en ce que** la commande de serrage (170) détecte dans le mode intérimaire le profil de vitesse du véhicule automobile et détermine des modifications de vitesse et lors du dépassement d'un nombre déterminé de modifications de vitesse après le premier signal de déclenchement (IS1) génère un second signal de déclenchement (IS2) pour le démarrage du mode de serrage.

9. Attelage selon l'une quelconque des revendications 3 à 8, **caractérisé en ce que** la commande de serrage (170) détermine par un capteur des changements de charge sur le col de boule (10) et lors du dépassement d'un nombre déterminé de changements de charge après le premier signal de déclenchement (IS1) génère un second signal de déclenchement (IS2) pour le démarrage du mode de serrage.

10. Attelage selon l'une quelconque des revendications 3 à 9, **caractérisé en ce que** la commande de serrage (170) génère dans le mode intérimaire après expiration d'un temps d'attente un second signal de déclenchement pour le démarrage du mode de serrage.

11. Attelage selon l'une quelconque des revendications précédentes, **caractérisé en ce que** la commande de serrage détermine le temps d'attente en fonction de l'état de serrage.

12. Attelage selon l'une quelconque des revendications précédentes, **caractérisé en ce que** la commande de serrage (170) suspend dans le mode de serrage une alimentation en courant du moteur d'entraînement (114, 272) électrique lors de la présence d'un état de roulement avec de très grandes charges du véhicule automobile.

13. Attelage selon la revendication 12, **caractérisé en ce que** la commande de serrage (170) détecte une charge sur le col de boule (10) avec un capteur (DM) et lors du dépassement d'une valeur seuil de la charge reconnaît un état de roulement avec de très grandes charges.

14. Véhicule automobile comprenant une carrosserie et un attelage, **caractérisé en ce que** l'attelage est réalisé selon l'une quelconque des revendications précédentes.
